(19) Europäisches Patentamt
European Patent Office
Office européen des brevets

(11) **EP 3 067 334 B1**

(12) **EUROPÄISCHE PATENTSCHRIFT**

(45) Veröffentlichungstag und Bekanntmachung des Hinweises auf die Patenterteilung:
**08.05.2019  Patentblatt 2019/19**

(51) Int Cl.:
**C03C 8/02** (2006.01)          **C03C 8/14** (2006.01)
**C03C 17/04** (2006.01)          **H05B 3/74** (2006.01)

(21) Anmeldenummer: **16158280.4**

(22) Anmeldetag: **02.03.2016**

(54) **BESCHICHTETES SUBSTRAT MIT EINEM GERÄUSCHOPTIMIERTEN DEKOR AUF GLASBASIS UND VERFAHREN ZUR HERSTELLUNG EINES SOLCHEN**

COATED SUBSTRATE WITH A NOISE OPTIMIZED DECORATION ON A GLASS BASIS AND METHOD FOR PRODUCING SAME

SUBSTRAT REVETU COMPRENANT UN DECOR OPTIMISE SUR LE PLAN ACOUSTIQUE A BASE DE VERRE ET SON PROCEDE DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2015   DE 102015103460**

(43) Veröffentlichungstag der Anmeldung:
**14.09.2016   Patentblatt 2016/37**

(73) Patentinhaber: **Schott AG**
**55122 Mainz (DE)**

(72) Erfinder:
• **Weber, Urban**
**55413 Weiler bei Bingen (DE)**
• **Knoche, Silke**
**55291 Saulheim (DE)**
• **Dudek, Roland**
**55545 Bad Kreuznach (DE)**
• **Korb, Thomas**
**55288 Partenheim (DE)**
• **Corvers, Stephan**
**65375 Oestrich-Winkel (DE)**

(74) Vertreter: **Witte, Weller & Partner Patentanwälte mbB**
**Postfach 10 54 62**
**70047 Stuttgart (DE)**

(56) Entgegenhaltungen:
**DE-A1-102004 002 766     JP-A- 2014 037 926**

• **Shu Hua Chang ET AL: "A Sound Quality Study of Household Electrical Appliances by Jury Test in Indoor Space", The Open Acoustics Journal, 17. Mai 2013 (2013-05-17), Seiten 11-19, XP055292348, DOI: 10.2174/1874837601306010011 Gefunden im Internet: URL:http://benthamopen.com/contents/pdf/TOACOJ/TOACOJ-6-11.pdf [gefunden am 2016-07-29]**

EP 3 067 334 B1

## Beschreibung

Die Erfindung betrifft ein beschichtetes Substrat, vorzugsweise aus Glas oder Glaskeramik, mit einem geräuschoptimierten Dekor auf Glasbasis. Die Erfindung betrifft ferner ein Verfahren zum Dekorieren eines Substrates, vorzugsweise aus Glas oder Glaskeramik, mit einem geräuschoptimierten Dekor auf Glasbasis. Die Erfindung betrifft ferner die Verwendung eines Dekors auf Glasbasis zur Erzeugung einer geräuschoptimierten Beschichtung auf einer Oberfläche eines Substrates, vorzugsweise aus Glas oder Glaskeramik.

Kochflächen aus Glaskeramik oder Spezialglas werden auf ihrer Oberfläche farbig gestaltet, teils aus ästhetischen Gründen, teils zur Abgrenzung verschiedener Kochgerätehersteller, teils aufgrund bestimmter gesetzlicher Vorgaben, die eine Kennzeichnung von Kochzonen fordern. Wegen der hohen Temperaturen auf der Kochfläche, insbesondere in den Kochzonen, von bis zu etwa 700°C, je nach Beheizungssystem und Kochsituation, kommen für die farbliche Gestaltung nur Emaille-basierende Farben bzw. Dekore in Frage.

Als Nachteil von Emaille-basierten Dekoren auf der Kochflächenoberseite haben sich die beim Verschieben von Kochgeschirr, wie etwa Töpfe oder Pfannen, entstehenden Geräusche herausgestellt, die als unangenehm empfunden werden. Eine besondere Relevanz erfährt dieses Problem insbesondere bei der Gestaltung sogenannter variabler Kochflächen beispielsweise auf Induktionsbasis oder auch anderer Beheizungsarten, bei denen keine festen Kochzonenpositionen definiert sind, sondern ein willkürliches Verschieben des Kochgeschirrs auf der Kochfläche an frei wählbaren Kochpositionen möglich ist. Bisher gab es fest vorgegebene Kochzonen, die durch meist kreisförmige Kochzonenumrandungen den Stellplatz des Kochgeschirrs markierten. Hier hatte der Anwender keinen Anlass, das Kochgeschirr zu verschieben, da außerhalb dieser Kochzonen keine Heizleistung erbracht werden konnte. Bei den variablen Kochflächen hingegen wird ein Bereich, der größer ist als eine herkömmliche Kochzone, mittels Dekorfarben/ Muster markert und in ihm können ein oder mehrere Töpfe beliebiger Größe beliebig platziert und beheizt werden. Unterhalb der variablen Kochfläche befinden sich beispielsweise mehrere Induktionsspulen, vorzugsweise viele kleine, mindestens aber 2 Spulen, die flexibel zusammengeschaltet werden können und den gesamten variablen Bereich oder auch nur Teilbereiche beheizen können. Je nachdem, ob man mehrere kleine Töpfe oder einen kleinen und einen größeren oder einen Bräter beheizen will, werden die entsprechenden Heizelemente zusammengeschaltet. Die variablen Kochflächen können auch durch andere Beheizungsarten wie Strahlungsbeheizung und/oder auch durch die Kombinationen von verschiedenen Beheizungsarten dargestellt werden. Diese Variabilität der Stellmöglichkeiten des Kochgeschirrs führt dazu, dass der Anwender geneigt ist, das Kochgeschirr möglicherweise häufiger zu verschieben, was durch die Dekoration auf der Kochflächenoberseite zu den genannten Geräuschen führt.

Im Stand der Technik verfolgte die Entwicklung von Dekoren zur Beschichtung von Substraten aus Glas oder Glaskeramik bisher als Zielgrößen:

- eine chemisch/physikalische Kompatibilität mit dem zu bedruckenden Substrat (z.B. Nullausdehnungsglaskeramik),

- die Prozessierbarkeit (Herstellung, Druckbarkeit, Einbrand in Kombination mit dem Keramisierungsprozess des Substrats usw.),

- die farblich/ästhetischen Vorstellungen seitens des Kochgeräteherstellers,

- die Erfüllung einer Reihe von Gebrauchseigenschaften, wie etwa Abriebfestigkeit, Temperaturbeständigkeit, Haftfestigkeit, mechanische Festigkeit des derart bedruckten Substrats, Resistenz gegenüber chemisch aggressiven Substanzen, Reinigbarkeit.

Speziell hinsichtlich der Optimierung der Gebrauchseigenschaften "Reinigbarkeit" und "Abrieb" gab es bisher Entwicklungen hin zu Dekoren mit geringer Rauheit.

So stellen die JP 2007101134 und JP 2014037926 Beziehungen her zwischen einer verbesserten Reinigbarkeit des Dekors und Kennwerten zur Rauheit des Dekors. Gemäß der JP 2003217811 und der JP 2004170754 werden neben einer verbesserten Reinigbarkeit auch optische Eigenschaften des Dekors, wie Lichtstreuung und Transmission, hervorgehoben. Aus der DE 103 38 165 A1 ist ein Dekor bekannt, dass aufgrund definiert eingestellter Rauheitswerte einen geringeren Abrieb des Topfbodenmaterials und dadurch eine verringerte Verschmutzungsneigung des Dekors bewirkt. Gemäß der DE 10 2004 002 766 A1 werden eine Reihe von thermischen, chemischen und abrasiven Vorteilen auf geringe Rauheitswerte des Dekors zurückgeführt.

Eine gezielte Einstellung von erhöhter Rauheit erfolgt im Rahmen von Entwicklungen zum Design haptischer Strukturen, die die Bedienbarkeit von Kochfeldern erleichtern sollen. Dies ist n der DE 10 2011 115 379 A1 beschrieben.

Aus der DE 10 2013 102 221 A1 sind ferner besonders kratzfeste amorphe und transparente Deckschichten auf Glas- oder Glaskeramik-Substraten bekannt, mit einer besonders geringen Oberflächenrauheit. Der Vorteil soll hierbei insbesondere in der Verringerung der mechanischen Kratzempfindlichkeit von Kochflächenoberflächen liegen.

Aus der. P 2014 037926 A ist ein Verfahren zum Herstellen einer Kochfeldabdeckung bekannt, bei dem aus einem $B_2O_3$-$SiO_2$-Glas eine Glasfritte hergestellt und derart gemahlen wird, dass die mittlere Partikelgröße 1,6 Mikrometer beträgt. Daraus wird unter Zusatz von Cu-Cr-Mn-Pigment-Pulver und eines Binders eine siebdruckfähige Paste hergestellt, die auf eine Glasplatte aufgetragen und dann bei 830 °C eingebrannt wird. Es ergibt sich eine beschichtete Glasplatte mit einer Oberflächenrauhigkeit $R_a$ von 0,08 Mikrometer.

Aus der DE 10 2004 002 766 A1 sind ferner ein flächiger Glaskeramikkörper und ein Verfahren zum Herstellen eines solchen bekannt, wobei ein gebundenes Glaspulver aus einem auf Glaskeramik matt aufschmelzenden Glas, etwa aus BOROFLOAT® 3.3, mit einem Erweichungspunkt von mehr als 750 °C bereitgestellt wird, daraus eine Paste hergestellt wird, die mittels Siebdruck auf mindestens eine Seite eines Grünglaskörpers oder des daraus keramisierten Glaskeramikkörpers selektiv aufgetragen wird und anschließend bei 850 °C bis 900 °C eingebrannt wird. Die Oberfläche hat eine Rauhigkeit $R_a$ von etwa 0,5 $\mu$m.

Jedoch sind in keinem der genannten Dokumente irgendwelche Untersuchungen zu Geräuschentwicklung beim Verschieben von Kochgeschirren erwähnt. Bislang sind überhaupt keine Untersuchungen zum Zusammenhang von Rauheitswerten von Dekoren oder Schichten auf Kochflächen, Arbeitsflächen oder vergleichbar genutzten Flächen und der Geräuschentwicklung beim Verschieben von Kochgeschirren, insbesondere auch unter Einbeziehung weiterer topografischer Details der Oberflächenstruktur, bekannt.

Vor diesem Hintergrund liegt der Erfindung die Aufgabe zugrunde, ein beschichtetes Substrat, vorzugsweise aus Glas oder Glaskeramik, mit einem Dekor auf Glasbasis anzugeben, das insbesondere als Spezialglas- oder Glaskeramik-Kochfläche geeignet ist und dessen Geräuschentwicklung beim Verschieben von Kochgeschirren derart modifiziert ist, dass die für das störende Hörempfinden wesentlichen psychoakustischen Kennwerte reduzier sind.

Diese Aufgabe wird durch ein beschichtetes Substrat gemäß Anspruch 1 gelöst.

Es hat sich gezeigt, dass mit einem derartig beschichteten Substrat mit einem derartigen Rauheitsanteil rms und einer solchermaßen niedrigen Schärfe und Lautheit eine derartige Kochfläche bereitgestellt werden kann, dass beim Verschieben von Kochgeschirren mit üblichen Geschwindigkeiten eine Geräuschoptimierung erzielbar ist, die vom Benutzer als nicht unangenehm empfunden wird.

Gemäß einer weiteren Ausgestaltung der Erfindung weist das mit dem Dekor beschichtete Substrat an seiner Dekoroberfläche einen mit Weißlicht-Interferenz-mikroskopie bestimmten Rauheitsanteil rms im Bereich von 10 mm$^{-1}$ bis 20 mm$^{-1}$ rms$_{10 \text{ mm-1}... 20 \text{ mm-1}}$ < 0,05 $\mu$m, bevorzugt rms$_{10 \text{ mm-1}... 20 \text{ mm-1}}$ < 0,02 $\mu$m, und einen Rauheitsanteil rms im Bereich von 20 mm$^{-1}$ bis 50 mm$^{-1}$ rms$_{20 \text{ mm-1}...50 \text{ mm-1}}$ < 0,03 $\mu$m, bevorzugt rms$_{20 \text{ mm-1}... 50 \text{ mm-1}}$ < 0,015 $\mu$m, auf.

Es hat sich herausgestellt, dass mit einer derartigen Oberflächentopografie die Schärfe des Verschiebegeräusches weiter reduziert ist.

Eine Korrelation der Schärfe mit im Stand der Technik üblicherweise bestimmten Rauheitskennwerten Rz und Ra nach DIN 4768 lässt sich nicht herstellen, wie nachfolgend noch im Einzelnen dargelegt wird. Mit den oben erwähnten Rauheitsanteilen lässt sich jedoch eine Korrelation mit der Schärfe herstellen. Insbesondere die Schärfe ist maßgeblich für die unangenehme Geräuschempfindung.

Durch die Optimierung dieser Rauheitsanteile lässt sich das Dekor hinsichtlich der Hörempfindung "Schärfe" positiv beeinflussen.

Gemäß einer weiteren Ausgestaltung der Erfindung besteht die Beschichtung aus einer eingebrannten Glasfritte bevorzugt auf der Basis von Silikatgläsern, Borosilikatgläsern, Zinksilikatgläsern, Zinkboratgläsern, Zinkborosilikatgläsern, Bismutborosilikatgläsern, Bismut-Borat-Gläsern, Bismut-Silikat-Gläsern, Phosphatgläsern, ZinkPhosphat-Gläsern, Aluminosilikatgläsern oder Lithium-Aluminosilikatgläsern.

Grundsäzlich sind diverse Dekorgläser, wie oben beschrieben, verwendbar, um ein geräuschoptimiertes Dekor auf einem Substrat zu erzeugen bzw. die genannten Topographie-Kennwerte rms$_{10 \text{ mm-1}... 20 \text{ mm-1}}$ und rms$_{20 \text{ mm-1}... 50 \text{ mm-1}}$ zu erreichen

Gemäß einer weiteren Ausgestaltung der Erfindung enthält die Glasfritte Zusätze aus Pigmenten, Füllstoffen und/oder strukturgebenden Partikeln.

Insbesor dere ein Zusatz von Pigmenten ist erwünscht, um auf Kochflächen Begrenzungen und herstellerspezifische Angaben, wie etwa Markenangaben usw., zu erzeugen. Insbesondere der Zusatz von Pigmenten führt hierbei zu deutlich erhöhten Kontrasten und Farbgebungsmöglichkeiten.

Insbesor dere der Zusatz von strukturgebenden Partikeln, insbesondere Glaskugeln, kann in einer weiteren Ausgestaltung der Erfindung zu je nach Anwendung erforderlichen Geräuscher mit einstellbarer Schärfe und Lautheit führen, die insbesondere als akustisches Signal eingesetzt werden können. Insbesondere können damit dabei Geräusche erreicht werden, die eine hohe Schärfe besitzen, um Aufmerksamkeit zu erregen, die aber andererseits verglichen mit herkömmlichen Dekorierungen "leiser" sind (d.h. eine reduzierte Lautheit besitzen), um den Anwender nicht unnötig zu irritieren.

Vorzugsweise besteht das Substrat aus Glas oder einer Glaskeramik, vorzugsweise einer LAS-Glaskeramik. Unter einer LAS-Glaskeramik versteht man eine Lithium-Alumino-Silikat-Glaskeramik (teilweise auch Lithium-Aluminium-Silikat-Glaskeramik genannt), die bei geeigneter Zusammensetzung und Keramisierung in einem bestimmten Temperaturbereich eine stark reduzierte thermische Ausdehnung hat, die nahe null sein kann. Beispielsweise wird von der Anmelderin unter der Marke Ceran® eine LAS-Glaskeramik zur Anwendung bei Kochfeldern hergestellt und vermarktet.

Das erfindungsgemäß beschichtete Substrat ist insbesondere für variable Kochflächen, insbesondere für variable Induktionskochflächen geeignet, die durch eine entsprechende Spulenanordnung für eine freie Verschiebung und/oder frei wählbare Stellmöglichkeiten des Kochgeschirrs ausgelegt sind. Unter variablen Kochflächen werden hier Kochflächen verstanden, die mindestens einen Bereich aufweisen, in dem ein oder mehrere Gargeschime beliebiger Größe beliebig platziert und beheizt werden können. Dies wird insbesondere dadurch realisiert, dass sich unterhalb der variablen Kochfläche bspw. mehrere Induktionsspulen, vorzugsweise viele kleine, mindestens aber zwei Spulen, befinden, die unabhängig voneinander zusammengeschaltet werden können und den gesamten variablen Bereich oder auch nur Teilbereich(e) beheizen können. Die variablen Kochflächen können auch durch andere Beheizungsarten wie Strahlungsbeheizung und/oder auch durch die Kombinationen von verschiedenen Beheizungsarten dargestellt werden.

Gemäß einer weiteren Ausgestaltung der Erfindung weist das Dekor einen Glasfluss aus einem Basisglas auf, das zumindest die folgenden Bestandteile (in Gew.-% auf Oxidbasis) aufweist:

| | |
|---|---|
| $SiO_2$ | 44 - 75 |
| $Al_2O_3$ | 0 - 25 |
| $B_2O_3$ | 0 - 30 |
| $Li_2O$ | 0 - 12 |
| $Na_2O$ | 0 - 15 |
| $K_2O$ | 0 - 10 |
| $CaO$ | 0 - 12 |
| $MgO$ | 0 - 9 |
| $BaO$ | 0 - 27 |
| $SrO$ | 0 - 4 |
| $ZnO$ | 0 - 20 |
| $TiO_2$ | 0 - 5 |
| $ZrO_2$ | 0 - 7 |
| $As_2O_3$ | 0 - 1 |
| $Sb_2O_3$ | 0 - 15 |
| $F$ | 0 - 3 |
| $H_2O$ | 0 - 3. |

Das Basisglas kann hierbei vorzugsweise mindestens 1 Gew.-%, besonders bevorzugt mindestens 2 Gew.-% $Al_2O_3$ aufweisen.

Gemäß einer weiteren Ausgestaltung der Erfindung weist das Basisglas mindestens 1 Gew.-%, voizugsweise mindestens 5 Gew.-% $B_2O_3$ auf.

Gemäß einer weiteren Ausgestaltung der Erfindung enthält das Basisglas mindestens 1 Gew.-%, eines Alkalioxids, das aus der Gruppe ausgewählt ist, die aus $Na_2O$, $K_2O$, $Li_2O$ und Mischungen hieraus besteht.

Ferner kann das Basisglas mindestens 1 Gew.-% eines Oxids enthalten, das aus der Gruppe ausgewählt ist, die aus $CaO$, $MgO$, $BaO$, $SrO$, $ZnO$, $ZrO_2$, $TiO_2$ und Mischungen hieraus besteht.

Ferner kann das Dekor einen Glasfluss aus einem Basisglas enthalten, das zumindest die folgenden Bestandteile (in Gew.-% auf Oxidbasis) aufweist:

| | |
|---|---|
| $SiO_2$ | 6 - 65 |
| $Al_2O_3$ | 0 - 20 |
| $B_2O_3$ | 0 - 40 |
| $Li_2O$ | 0 - 12 |
| $Na_2O$ | 0 - 18 |
| $K_2O$ | 0 - 17 |
| $CaO$ | 0 - 17 |
| $MgO$ | 0 - 12 |
| $BaO$ | 0 - 38 |
| $SrO$ | 0 - 16 |
| $ZnO$ | 0 - 70 |

(fortgesetzt)

| | |
|---|---|
| TiO$_2$ | 0 - 5 |
| ZrO$_2$ | 0 - 5 |
| Bi$_2$O$_3$ | 0 - 20 |
| CoO | 0 - 5 |
| Fe$_2$O$_3$ | 0 - 5 |
| MnO | 0 - 10 |
| CeO$_2$ | 0 - 3 |
| F | 0 - 6. |

Die Beschichtung des Substrates kann vollflächig erfolgen. Grundsätzlich wird jedoch in der Regel nur ein Flächenanteil von 3 - 100 % des Substrats an seiner Oberseite mit einem Dekor versehen.

Die Erfindung wird ferner durch ein Verfahren zum Dekorieren eines Substrates gemäß Anspruch 6 gelöst.

Es hat sich gezeigt, dass mit einem derartigen Verfahren insbesondere eine variable Induktionskochfläche aus Glaskeramik herstellbar ist, die bezüglich des empfundenen Verschiebegeräusches optimiert ist.

Erfindungsgemäß erfolgt cas Vermahlen und Homogenisieren der Glasfritte derart, derart dass im Wesentlichen keir e Agglomerate > 20 Mikrometer, vorzugsweise > 10 Mikrometer, besonders bevorzugt > 5 Mikrometer, vorhanden sind.

Unter "im Wesentlichen keine" wird in diesem Zusammenhang verstanden, dass der Volumenanteil derartiger Agglomerate kleiner als 1 %, vorzugsweise kleiner als 0,1 %, besonders bevorzugt kleiner als 0,01 % ist.

Es hat sich gezeigt, dass insbesondere die Vermeidung von Agglomeraten wesentlich ist, um eine geringe Lautheit und eine geringe Schärfe zu erzielen, um also das empfundene Geräusch beim Verschieben eines Kochgeschirrs so gering wie möglich zu halten.

In weiter bevorzugter Ausgestaltung wird hier das Dekor derart eingebrannt, dass die Oberfläche einen mit Weißlicht-Interferenzmikroskopie bestimmten Rauheitsanteil rms im Bereich von 10 mm$^{-1}$ bis 20 mm$^{-1}$ rms$_{10\,mm\text{-}1...\,20\,mm\text{-}1}$ < 0,05 $\mu$m, bevorzugt rms$_{10\,mm\text{-}1...\,20mm\text{-}1}$< 0,02 $\mu$m, und einen Rauheitsanteil rms im Bereich von 20 mm$^{-1}$ bis 50 mm$^{-1}$ rms$_{20\,mm\text{-}1...\,50\,mm\text{-}1}$ < 0,03 $\mu$m, bevorzugt rms$_{20\,mm\text{-}1...\,50\,mm\text{-}1}$ < 0,015 $\mu$m.

Wird der Glasfluss beim Einbrennen derart eingestellt, dass sich solche Rauheitsanteile ergeben, so kann auf diese Weise die Schärfe der so hergestellten Kochfläche ausreichend niedrig gehalten werden, so dass das Verschiebegeräusch beim Verschieben eines Kochgeschirrs nicht als unangenehm empfunden wird.

Weiter bevorzugt wird zum Mahlen der Glasfritte ein Trockenmahlverfahren, insbesondere mit Kugelmühlen-, Strahlmühlen-, Gegen- oder Luftvermahlung, bevorzugt. Insbesondere wird die Vermahlung mit einer trockenen Rührwerkskugelmühle in Kombination mit einem Sichter bevorzugt, um eine enge Partikelverteilung ohne Agglomerate zu erhalten.

Es hat sich gezeigt, dass insbesondere durch eine Trockenvermahlung eine Agglomeration vermieden werden kann, die durch Nassvermahlung mit anschließender Trocknung auftritt. Da es insbesondere bei den hergestellten Dekoren auf eine möglichst glatte Oberfläche ankommt, in der keine Unebenheiten enthalten sind, eignen sich Trockenmahlverfahren besonders, um unerwünschte Partikel an der Oberfläche, die durch Agglomerate bedingt sind, zu vermeiden.

Der GlasFritte werden gemäß einer weiteren Ausführung der Erfindung Zusatzstoffe, insbesondere Pigmente, Füllstoffe und/oder strukturgebende Partikel beigemischt und zusammen damit homogenisiert.

Als Füllsfoffe kommen hierbei insbesondere SiOx-Partikel, Aluminiumoxid-Partikel, pyrogene Kieselsäuren, Kalk-Natron-Partikel, Alkali-Aluminosilikat-Partikel, Polysiloxankugeln, Borosilikatglaskugeln und/oder Glashohlkugeln in Betracht.

Als Pigmente können insbesondere farbgebende Pigmente in Form von Metalloxiden hinzugesetzt werden, insbesondere Cobalt-Oxide/-Spinelle, Cobalt-Aluminium-Spinelle, Cobalt-Aluminium-Zink-Oxide, Cobalt-Aluminium-Silizium-Oxide, Cobalt-Titan-Spinelle, Cobalt-Chrom-Spinelle, Cobalt-Aluminium-Chrom-Oxide, Cobalt-Nickel-Mangan-Eisen-Chrom-Oxide/-Spinelle, Cobalt-Nickel-Zink-Titan-Aluminium-Oxide/- Spinelle, Chrom-Eisen-Nickel-Mangan-Oxide/-Spinelle, Cobalt-Eisen-Chrom-Oxide/- Spinelle, Nickel-Eisen-Chrom-Oxide/-Spinelle, Eisen-Mangan-Oxide/-Spinelle, EisenOxide, Eisen-Chrom-Oxide, Eisen-Chrom-Zinn-Titan-Oxide, Kupfer-Chrom-Spinelle, Nickel-Chrom-Antimon-Titan-Oxide, Titan-Oxide, Zirkon-Silizium-Eisen-Oxide/-Spinelle. Bevorzugt werden als Pigmente Absorptionspigmente, insbesondere auch plättchen- oder stäbchenförmige Pigmente, beschichtete Effektpigmente verwendet, die als Einzelpigmente oder auch als Pigmentmischung der Glasfritte zugesetzt werden können.

Allerdings haben die Erfinder erkannt, dass es zur Erzeugung einer geräuschoptimierten Dekoroberfläche besonders darauf ankommt, dass keine unaufgeschmolzenen Partikel in der Oberfläche des Dekors enthalten sind. Die Pigmente und Füllstoffe sind dabei vom Dekorglas umhüllt/eingebettet, insbesondere wird die Dekoroberfläche nicht durch Pigmente oder Füllstoffe durchbrochen. Die Pigmente und Füllstoffe werden mit der flüssigen Glasfritte beim Aufschmelzprozess ausreichend benetzt, so dass bspw. ein Aufschwimmen der Pigmente/Füllstoffe vermieden wird, das Erhebungen oder Vertiefungen in der Dekoroberfläche führt. Aus diesem Grunde werden vorzugsweise der Glasfritte nach dem Zermahlen maximal 20 Gew.-%, vorzugsweise 10 Gew.-%, weiter bevorzugt maximal 7 Gew.-%, besonders bevorzugt maximal 5 Gew.-%, an Pigmenten und Füllstoffen zugesetzt.

Da es sich insbesondere bei Pigmenten teilweise um höherschmelzende Komponenten handelt, die im normalen Aufschmelzbereich der Dekore nicht in der Glasschmelze aufgelöst werden, kann auf diese Weise durch eine entsprechende Begrenzung der Pigmente und weiterer Zusätze sichergestellt werden, dass sich an der Oberfläche der Dekore keine Vorsprünge befinden, die sich nachteilig auf die Lautheit oder Schärfe beim Verschieben von Kochgeschirren auf der Dekoroberfläche auswirken können. Vorzugsweise wird hierbei vollständig auf den Zusatz von Pigmenten, Füllstoffen und weiteren Additiven verzichtet.

Ist dagegen ein Pigmentzusatz wegen einer gewünschten Farbgebung unbedingt notwendig, ggf. auch mit einem höheren Prozentanteil, so werden gemäß einer weiteren bevorzugten Ausführung der Erfindung die Pigmente und ggf. weitere Füllstoffe zunächst zusammen mit dem Glasfluss aufgeschmolzen und zu Glasfritte vermahlen, bevor das Dekor auf die Glasoberfläche appliziert wird. Die Farbgebung wird hierbei durch das Auskristallisieren von Farbkörpern während des Einbrandprozesses des Dekors nach dem Glattfließen der Glasfritte erzeugt, wobei die Kristalle überwiegend in der Dekorschicht und nicht an der Oberfläche entstehen und somit in den Glasfluss eingebettet sind.

Auf diese Weise können insbesondere auch höhere Anteile von farbgebenden Pigmenten im Glasfluss vollständig aufgelöst und damit integriert werden, ohne dass beim späteren Aufschmelzen des Dekors auf der Substratoberfläche nicht aufgeschmolzene Partikel in der Oberfläche verbleiben und damit einen nachteiligen Einfluss auf die Geräuschentwicklung ausüben.

Zur Applizierung des Dekors auf eine Substratoberfläche kann vorzugsweise ein Flüssigbeschichtungsverfahren, insbesondere ein Siebdruck-, Inkjet-, Offset-Druck-, Tampondruck-, Sprüh-, Tauchbeschichtungs-, Rollenbeschichtungs-, Abziehbildverfahren oder Rakeln, Fluten, Spin-Coating-Verfahren, verwendet werden.

Insbesondere eine Beschichtung durch Siebdruck ist ein zur großtechnologischen Herstellung besonders geeignetes Verfahren, wobei Siebe mit einer Feinheit von 100 bis 140 Fäden pro Zentimeter bevorzugt sind. Zum im Wesentlichen agglomeratfreien Homogenisieren der Farbpaste kann vorzugsweise ein Walzwerk oder ein Dispermat verwendet werden.

Das Dekor wird nach der Applikation eingebrannt, vorzugsweise in einem Temperaturbereich von 600°C bis 1200°C, vorzugsweise über eine Zeitdauer von 1 Minute bis 4 Stunden.

Die Einbrenntemperatur wird hierbei vorzugsweise derart an das Substrat angepasst, dass sich ein gleichmäßiges, homogenes Aufschmelzen des Dekors in einer sehr glatten Oberfläche ergibt, aus der möglichst wenig Partikel hervorstehen. Einbrenntemperatur und -zeit werden hierbei vorzugsweise an die Zusammensetzung des Dekors angepasst. Das Einbrennen des Dekors erfolgt üblicherweise bei Temperaturen, die unterhalb der Erweichungstemperatur des Substrates liegen, aber ausreichend hoch sind, um ein Aufschmelzen der Glasur und ein inniges Verbinden mit der Oberfläche des Substrates zu gewährleisten.

Nach dem Applizieren des Dekors wird dieses vorzugsweise vor dem Einbrennen bei erhöhter Temperatur (z.B. 150 bis 200 °C) getrocknet.

Bei dem betreffenden Substrat kann es sich um ein Glas oder eine Glaskeramik, das transparent, eingefärbt transparent, transluzent oder opak sein kann, mit einem thermischen Ausdehnungskoeffizienten im Bereich von 20 - 300 °C, von $\leq 7 \cdot 10^{-6}$/K, bevorzugt $\leq 6{,}5 \cdot 10^{-6}$/K, weiter bevorzugt von $\leq 5 \cdot 10^{-6}$/K, besonders bevorzugt im Bereich von $-1 \cdot 10^{-6}$/K bis $4{,}5 \cdot 10^{-6}$/K, handeln., Es wird besonders bevorzugt eine LAS (Lithium-Aluminium-Silikat) Glaskeramik verwendet. Die Dicke der Substrate beträgt 0,1 bis 40 mm, bevorzugt 1 bis10 mm, besonders bevorzugt 3 bis 6 mm.

In bevorzugter Weiterbildung der Erfindung wird als Substrat eine Glaskeramik, insbesondere eine LAS-Glaskeramik, verwendet, auf die das Dekor im Grünglaszustand appliziert wird und in das Dekor eingebrannt wird, wobei gleichzeitig das Grünglas keramisiert wird. Es sei angemerkt, dass "Grünglas" ein allgemeiner Begriff für Gläser ist, aus denen durch den Keramisierungsprozess Glaskeramiken gebildet werden. Der Begriff "Grünglas" ist somit nicht auf bestimmte Glas/Glaskeramikfarbtöne eingeschränkt.

Auf diese Weise ist eine besonders rationelle Herstellung gewährleistet. Außerdem kann eine innige Verbindung des Dekors mit der Glasoberfläche gewährleistet werden und eine nachteilige Veränderung des Substrates durch den Einbrennvorgang vermieden werden.

Für das gleichzeitige Einbrennen und Keramisieren wird hierbei vorzugsweise ein Temperaturbereich von 850 bis 1200 °C, vorzugsweise von 900 bis 1150 °C gewählt, wobei die Zeitdauer in der Regel 5 bis 240 Minuten, vorzugsweise von 10 bis 60 Minuten, besonders bevorzugt 10 bis 30 Minuten beträgt.

Alternativ ist es auch möglich, als Substrat eine Glaskeramik, insbesondere eine LAS-Glaskeramik zu verwenden, auf die das Dekor im keramisierten Zustand appliziert wird und das Dekor anschließend eingebrannt wird.

Erfolgt das Einbrennen des Dekors auf die bereits keramisierte Glaskeramik, so liegt die Einbrenntemperatur in der Regel niedriger, so dass bevorzugt eine Temperatur von 600 bis 1200 °C, vorzugsweise von 700 bis 900 °C gewählt wird, über eine Zeitdauer von 1 bis 240 Minuten, vorzugsweise von 2 bis 120 Minuten.

Schließlich wird mit der Erfindung eine Verwendung eines Dekors auf Glasbasis zur Erzeugung einer geräuschoptimierten Beschichtung auf einer Oberfläche eines Substrates aus Glas oder Glaskeramik angegeben, die insbesondere für eine variable Kochfläche, insbesondere eine variable Induktionskochfläche geeignet ist, mit geringer Schärfe und Lautheit, insbesondere mit einer Schärfe < 3 acum und/oder einer Lautheit < 7 sone, gemessen nach DIN 45631/A1:2010-03 und DIN 45692:2009-08 auf dem mit dem Dekor beschichteten Substrat mit den Außenmaßen 500 mm x 550 mm, unter Verwendung eines Stahl-Emaille-Topfes mit emailliertem Boden der Firma Silit, des Typs Silargan® Bratentopf 20 cm Accento mit einem Durchmesser des Stellbodens von 17 cm und einem innen aufgenommenen Gewicht der Masse von 1 kg, unter Verschieben des Topfes mit einer Geschwindigkeit von 0,08 m/s.

Schließlich wird das Dekor vorzugsweise zur Erzeugung einer Beschichtung verwendet mit einem mit Weißlicht-Interferenzmikroskopie bestimmten Rauheitsanteil rms im Bereich von 10 mm$^{-1}$ bis 20 mm$^{-1}$ von kleiner als 0,1 Mikrometer ($rms_{10\ mm\text{-}1... 20\ mm\text{-}1} < 0,1\ \mu m$), bevorzugt $rms_{10\ mm\text{-}1... 20\ mm\text{-}1} < 0,02\ \mu m$, und einem Rauheitsanteil rms im Bereich von 20 mm$^{-1}$ bis 50 mm$^{-1}$ von kleiner als 0,04 Mikrometer ($rms_{20\ mm\text{-}1... 50\ mm\text{-}1} < 0,04\ \mu m$), bevorzugt $rms_{20\ mm\text{-}1... 50\ mm\text{-}1} < 0,015\ \mu m$.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:

Figur 1     Dekormuster auf einer Substratoberfläche mit unterschiedlichen Flächenbelegungen

Figur 2     eine alternative Flächenbelegung für ein Siebdruckmuster für ein Dekor mit unterschiedlichen Flächenbelegungen;

Figur 3     eine alternative Ausführung eines Siebdruck-Musters für ein Dekor in Form eines Punktmuster-Layouts bei quadratischer Anordnung mit unterschiedlichen Flächenbelegungen; und

Figur 4     unterschiedliche Siebdruckmuster für ein Dekor mit unstöchiometrischer Rasteranordnung mit unterschiedlichen Flächenbelegungen.

### Verwendete Messmethoden

Die psychoakustischen Eigenschaften der mit Dekoren beschichteten Substrate, d.h. das menschliche Geräuschempfinden beim Verschieben eines Kochgeschirrs auf der Oberfläche werden durch zwei Parameter beschrieben, die Schärfe und die Lautheit.

Die experimentelle Bestimmung des Parameters Schärfe ist beschrieben in DIN 45692:2009-08, Messtechnische Simulation der Hörempfindung Schärfe: Ein hoher Schärfewert und eine hohe Lautheit werden allgemein als unangenehm empfunden. Die Bestimmung der Lautheit erfolgte nach DIN 45631/A1:2010-03.

Die Aufnahme der psychoakustischen Parameter erfolgt dabei im Detail nach folgendem Verfahren:

Eine Kochfläche mit den Außenmaßen 500 mm x 550 mm und der Dicke 4 mm, bedruckt mit dem zu bewertenden Dekor, wird auf einen gummierten Metallrahmen mit gleichem Außenmaß aufgelegt. Die Ausführung des Metallrahmens und der Gummierung folgt dabei im Wesentlichen den Ausführungen zur Halteeinrichtung beispielsweise der DIN 52306. Der Rahmen und die Platte werden dabei möglichst von weiteren Halteeinrichtungen bzgl. akustischer Schwingungen entkoppelt, z.B. durch Filzauflagen.

Ein neuwertiger Stahlemailtopf mit emailliertem Boden der Fa. Silit, Silargan Bratentopf 20 cm Accento mit Durchmesser des Stellbodens von 17 cm, wird durch ein innen haftendes Gewicht mit einer Masse von 1 kg aus metallischem Werkstoff zusätzlich beschwert. Neuwertig bedeutet, dass der Topf weniger als 50 Prüfzyklen des nachfolgenden beschriebenen Prüfverfahrens absolviert hat.

Ein derartiger Topf des Typs Silargan Bratentopf 20 cm Accento, der bei der Messung in neuwertigem Zustand verwendet wurde, wird von der Firma Silit vertrieben. Er besitzt einen emaillierten Boden mit einer Vickers-Härte von 635 +/- 50 HV 0,1/10 nach DIN EN ISO 6507-1 und einer Rauheit Ra zwischen 0,2 - 0,9 $\mu m$ nach DIN EN ISO 4288:1998, einen Durchmesser des Stellbodens von 17 cm, eine Höhe von 8,5 cm, einen Innendurchmesser am oberen Rand von 20 cm und ein Leergewicht von 1,6 kg.

Der Topf wird ohne Eigenrotation kreisförmig über die dekorierte Kochfläche geführt, wobei der Kreisradius, gemessen vom Kreismittelpunkt bis zum Topfbodenmittelpunkt 26 mm beträgt. Die Frequenz der Kreisbewegung beträgt standardmäßig 0,5 Hz (in der Tabelle als "langsam" bezeichnet), in einigen Fällen wurde die doppelte Frequenz (1 Hz) verwendet (in der Tabelle: "schnell"), das entspricht Verfahrgeschwindigkeiten von ca. 0,08 bzw. 0,16 m/s, wie sie auch im Alltag der Benutzung einer Kochfläche typischerweise auftreten.

Alternativ wurde auch eine Linearbewegung mit einer Frequenz von ebenfalls 0,5 Hz und einem Verfahrweg von 50 mm verwendet (ca. 0,1 m/s). Die Geräuschaufnahme erfolgt gemäß der zitierten Normen, wobei die Pegelaufnahme mit einem Mikrofon erfolgt, das 700 mm lotrecht oberhalb der Kochflächenmitte aufgehängt ist. Zur Auswertung werden Geräuschaufnahmen mit einer durchgängigen Aufnahmedauer von 10 s verwendet, Der gesamte Versuchsaufbau befindet sich dabei in einem schallisolierten und schallgedämmten Raum. Kleinere Substratflächen wurden ebenfalls untersucht (Größe: 250 mm x 380 mm, Dicke 4 mm), hierbei ergeben sich größenabhängig geringere Lautheitswerte, allerdings vergleichbare Schärfewerte. Soweit nicht anders angegeben, beziehen sich Lautheitswerte (insbesondere auch in den Ansprüchen) immer auf die große Fläche 500 mm x 550 mm.

Zu einer vergleichenden Bewertung von mit Dekor beschichteten Substraten wurden die topografischen Daten der Dekoroberflächen herangezogen, nämlich die mittels Weißlicht-Interferenzmikroskopie ermittelten Rauheitswerte Ra, Rz (vgl. DIN 4768), um ihre Auswirkungen auf die akustischen Eigenschaften zu bestimmen.

Es stellte sich jedoch heraus, dass diese Werte nicht mit den für ein störendes Hörempfinden wesentlichen psychoakustischen Kennwerten korrelieren, sondern dass stattdessen eine differenziertere Beschreibung der Topografie erforderlich ist.

Mit anderen Worten reicht es also nicht aus, im Stand der Technik als besonders glatt dargestellte Dekore mit geringen Werten von Ra und Rz zu verwenden, um eine geräuschoptimierte Oberfläche eines mit einem Substrat beschichteten Dekors zu erhalten.

Zur Ermittlung der neuartigen Rauheitsparameter, die mit den psychoakustischen Werten korrelieren, wurde die Weißlicht-Interferenzmikroskopie eingesetzt, um Topografiewerte auf Flächen von 3,12 mm x 3,11 mm durch stitching (laterale Auflösung 0,8 $\mu$m) zu bestimmen.

Die Weißlicht-Interferenz-Mikroskopie-Analysen erfolgten mit einem Weißlicht-Interferenz-Mikroskop des Typs NewView 200 CHR von der Zygo Corporation. Zur Auswertung wurde die 32-bit Software MetroPro Version 8.3.5 unter Windows XP SP 3 verwendet.

Die Mess-/Auswerteparameter sind wie folgt festgelegt:

- optische Parameter: 50x-Objektiv, Zoom-Faktor 0,5x, Kamera: 320 x 200 Bildpunkte -> Auflösung 0,8 $\mu$m,

- Zur Ermittlung der Topografiewerte der Oberflächen auf einer Fläche von 3,12 mm x 3,11 mm wurde so genanntes "Stitching" verwendet (Aneinanderreihung individidueller (kleinerer) Topografie-Aufnahmen), und zwar mit den nachfolgenden Parametern: Cols 15, Rows 20, Overlap 20%. Hieraus ergeben sich Topographiedaten mit 3900 $\pm$ 20 Zeilen und Spalten (eine geringfügig veränderte Wahl der Parameter bzw. eine Mittelung über weniger Zeilen/ Spalten bzw. die Verwendung eines kleineren Messfensters [mind. aber 1 mm] sollte keinen signifikanten Einfluss auf das Ergebnis der Auswertung haben).

Aus den ermittelten Topografiedaten lassen sich die sog. Power Spectral Density-Funktionen (PSD) errechnen. Diese Größe ist z.B. in der Norm ISO 10110-8:2010(E) definiert. Wenn die Topographiedaten ein Höhenprofil beschreiben mit z = z(x,y), dann sind die (zeilen- bzw. spaltenweisen) PSD-Funktionen wie folgt definiert:

$$PSD_{1D,y}(f_x) = \lim_{L \to \infty} \frac{1}{L} \left| \int_{-L/2}^{+L/2} z(x,y) \exp(-2\pi i f_x x) dx \right|^2$$

bzw.

$$PSD_{1D,x}(f_y) = \lim_{L \to \infty} \frac{1}{L} \left| \int_{-L/2}^{+L/2} z(x,y) \exp(-2\pi i f_y y) dy \right|^2$$

Da die Rauheitswerte der Oberfläche im wesentlichen stochastischer Natur sind, ergeben sich für die PSD1D,x und die PSD1D,y im wesentlich die gleichen Werte, so dass sich durch Mittelwertbildung über die 3900 $\pm$ 20 Zeilen sowie die 3900 $\pm$ 20 Spalten gemittelte Werte $\overline{PSD_{1D,x}(f_y)}$ und $\overline{PSD_{1D,y}(f_x)}$ der PSD ergeben, die sich wiederum zu einem Gesamt-Mittelwert $PSD_{1D}(f) = (\overline{PSD_{1D,x}(f)} + \overline{PSD_{1D,y}(f)})/2$ zusammenfassen lassen.

Aufgrund des Parsevalschen Theorems ergibt sich für die rms-Rauheit der Topographie folgender Zusammenhang mit der PSD-Funktion:

$$rms^2 = \int\limits_{0}^{+\infty} PSD_{1D}(f)\,df$$

Entsprechend lassen sich "Rauheitsanteile" für beliebige Frequenzbereiche angeben (im Ortsfrequenzraum, wobei die Ortsfrequenz dem Kehrwert einer entsprechenden Wellenlänge entspricht: fx ~ 1/λx):

$$rms(f_1...f_2)^2 = \int\limits_{f_1}^{f_2} PSD_{1D}(f)\,df$$

Die Gesamtrauheit rms lässt sich entsprechend aus den "Rauheitsanteilen" berechnen:

$$rms^2 = rms(0...f_1)^2 + rms(f_1...f_2)^2 + rms(f_2...f_3)^2... + rms(f_N...\infty)^2$$

Da die unbeschichtete Substrat-Oberfläche bereits eine unregelmäßige Rauheit im längerwelligen Bereich aufweist, wurden längerwellige Rauheitskomponenten für die Analyse zunächst herausgefiltert (Frequenz < 1mm-1). Von den resultierenden Topografien kann über einen weiten Spektralbereich die spektrale Dichte der Rauheit (power spectral density, PSD) betrachtet werden - gemittelt über x- und y-Richtung. Sollten die dekorierten Flächen kleiner sein als die in der obigen Auswertung beschriebenen Flächen (3,1 mm x 3,1 mm), so können ersatzweise auch Werte verwendet werden, die auf kleineren Flächen ermittelt wurden. Wichtig hierbei ist aber, die Mittelung der PSD-Funktion über eine statistische Gesamtheit durchzuführen, die der oben beschriebenen äquivalent ist (d.h. Mittelung über mindestens 2 x 3900 = 7800 Linienprofile).

Die Rauheitsanteile zwischen 10 mm-1 und 20 mm-1 und zwischen 20 und 50 mm-1, d.h. rms (10 mm-1... 20 mm-1) und rms (20 mm-1... 50 mm-1) lassen sich mit den Werten für die Hörempfindung Schärfe korrelieren.

Durch die Optimierung dieser Rauheitsparameter lässt sich das Dekor hinsichtlich der Hörempfindung Schärfe positiv beeinflussen.

Herstellung erfindungsgemäßer Dekore und Beschichtung von Substraten

Die erfindungsgemäßen Dekore basieren auf einer eingebrannten keramischen Farbe. Die keramische Farbe besteht aus einem Glasfluss, der u.a. mit Pigmenten, Füllstoffen, strukturgebenden Partikeln versetzt sein kann.

Das Einbrennen des Dekors erfolgt üblicherweise bei Temperaturen, die unterhalb des Erweichungsbereiches des Substrates liegen, aber ausreichend hoch sind, um ein Aufschmelzen der Glasur und ein inniges Verbinden mit der Oberfläche des Substrates zu gewährleisten. Eine Möglichkeit der Herstellung von Glasuren besteht in dem Einschmelzen der Glasrohstoffe zu einem Glas, auch Glasfluss genannt, das nach dem Erschmelzen und Abkühlen aufgemahlen wird. Das Mahlprodukt wird als Glasfritte bezeichnet. Eine solche Glasfritte wird üblicherweise mit geeigneten Hilfsstoffen, zum Beispiel Suspendiermitteln, versetzt, die dem Auftragen des Emailpulvers dienen.

Die farbgebenden Pigmente werden bei herkömmlichen Dekoren üblicherweise der gemahlenen Glasfritte beigemischt und zusammen homogenisiert.

Es hat sich jedoch gezeigt, dass zur Herstellung von geräuschoptimierten Dekoren der Verzicht auf Zusätze, wie etwa farbgebende Pigmente besonders vorteilhaft ist bzw. eine Begrenzung auf einen gewissen Anteil von z.B. max. 10 Gew.-%. Alternativ können die Pigmente zusammen mit den Basisgläsern aufgeschmolzen und zu Glasfritte vermahlen werden. Die hieraus hergestellten Dekore wiesen günstigere Lautheits- und Schärfewerte auf als Dekore vergleichbarer Zusammensetzung, denen die Pigmente erst nach der Frittenherstellung zugemischt wurden.

Zum Mahlen der Glasfritte können verschiedene Trocken- und Nassmahltechnologien angewendet werden, bspw. Kugelmühlen, Strahlvermahlung. Es werden die Trockenmahlverfahren, wie Gegen-, Luft- oder Dampfstrahlvermahlung, bevorzugt, um die Agglomeratbildung der gemahlenen Produkte während der Trocknung (weitestgehend) zu verhindern. Insbesondere wird die Vermahlung mit einer trockenen Rührwerkskugelmühle in Kombination mit einem Sichter bevorzugt, um eine enge Partikelverteilung ohne Agglomerate zu erhalten.

Im Folgenden werden die bevorzugten Bestandteile der Glasur näher erläutert. In den nachfolgenden Tabellen 1 und 2 sind verschiedene Glaszusammensetzungen angegeben, die zur Verwendung als Dekor, d.h. zur Beschichtung von Glas- bzw. Glaskeramiksubstraten in Frage kommen.

Als Glasfritte werden vorzugsweise folgende Glasarten verwendet, z.B. alkalifreien und alkalihaltigen Gläser, Silikatgläser, Borosilikatgläser, Zinksilikatgläser, Zinkboratgläser, Zinkborosilikatgläser, Bismutborosilikatgläser, Bismutboratgläser, Bismutsilikatgläser, Phosphatgläser, Zinkphosphatgläser, Aluminosilikatgläser oder Lithiumaluminosilikatgläser. Je nach Einbrandbedingung und Trägermaterial (Substrat) wird der Fachmann ein geeignetes Glasurglas auswählen, insbesondere dahingehend, dass bei angepasster Glasur-Schichtdicke ein An- bzw. Aufschmelzen des Glasurglases gewährleistet ist. Das bedeutet beispielsweise, dass die Viskositätswerte Tg und Ew des Glases unterhalb der Einbrenntemperatur liegen. Bevorzugt liegt die Einbrenntemperatur mindestens 100°C, bevorzugt mindestens 150 °C und weiter bevorzugt mindestens 200 °C oberhalb der Erweichungstemperatur. Die Zeitdauer des Einbrandes kann je nach verwendetem Temperaturprogramm zwischen einer Minute und mehreren Stunden liegen.

Die Schichtdicken der eingebrannten keramischen Dekore auf den Substraten können zwischen 0,5 und 50 $\mu$m, bevorzugt zwischen 1 und 20 $\mu$m, besonders bevorzugt zwischen 1 und 7 $\mu$m liegen. Die Dekore können vollflächig oder auch lokal, als strukturierte Dekore wie Raster, Muster, Schriftzeichen, Symbole etc. vorliegen, als eine einzelne Schicht oder auch mehrere Dekore nebeneinander angeordnet und/oder auch übereinander beschichtet sein.

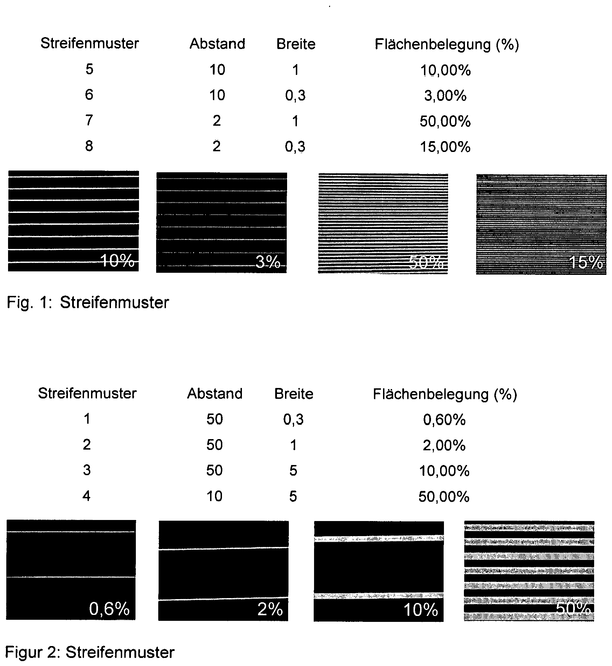

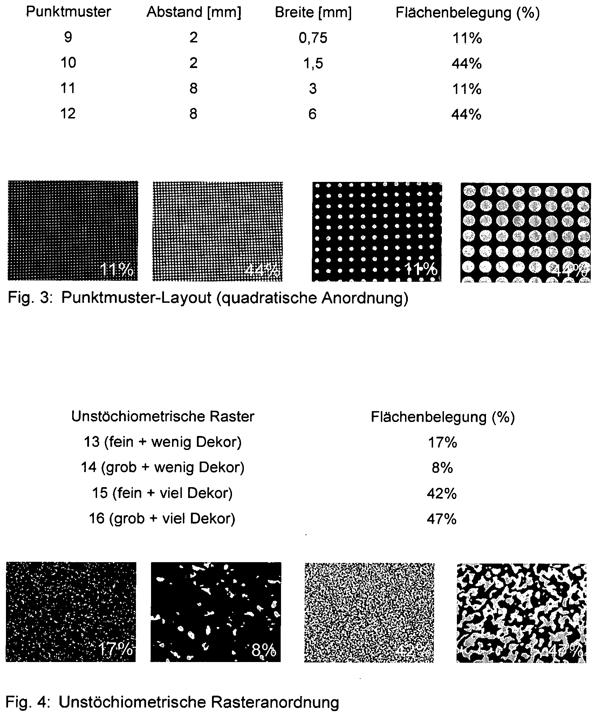

Verschiedene Dekormuster, die bei den Musterbeschichtungen verwendet wurden, sind nachfolgend in den Fig. 1 bis 4 dargestellt.

Ebenso können zusätzlich zu dem Dekor auf der Substratoberseite auch Dekor(e) auf der Unterseite angeordnet sein, insbesondere bei transparenten Substraten. Diese Dekore beispielsweise auf keramischer, Sol-Gel-, Silikon-, Polymer- Basis, und/oder Metalloxid-/ Metallschichten, können einzeln als auch in Kombination(en) verwendet werden. Die Dekore auf der Unterseite können ebenfalls vollflächig oder auch lokal, als strukturierte Dekore wie Raster, Muster, Schriftzeichen, Symbole etc. vorliegen, als eine einzelne Schicht oder auch mehrere Dekore nebeneinander angeordnet oder auch übereinander beschichtet sein.

Die Applizierung der Dekore erfolgt vorzugsweise über Flüssigbeschichtungsverfahren wie Siebdruck-, Inkjet-, Off-Set-Druck-, Tampondruck-, Sprühverfahren, Tauchbeschichtung, Rollenbeschichtung, Rakeln, Fluten, Spin-Coating oder kann auch per Abziehbildverfahren erfolgen. Die notwendigen, meist organischen Hilfsmittel verflüchtigen sich beim Einbrennen der Dekore.

Als Substrate werden vorzugsweise Materialien verwendet, die Glas und/oder Glaskeramik aufweisen oder hieraus bestehen. Grundsätzlich können die Substrate auch aus Verbundmaterialien oder auch verstärkten bspw. faserverstärkten Materialien bestehen.

Die Substrate können mit weiteren Beschichtungen und/oder mit Zusatzfunktionen versehen sein. Bspw. können die Substrate chemisch oder thermisch gehärtet sein und/oder funktionelle Beschichtungen wie reibvermindernde, Anti-Kratz-, Easy-to-clean-Eigenschaften aufweisen. Ebenso sind Behandlungen, oder auch Nachbehandlungen, wie mechanische Bearbeitung, bspw. abrasive Prozesse, Polierprozesse, oder chemische Bearbeitung wie Ätzen nicht ausgeschlossen. Die Substrate können beispielsweise. Bohrungen, lokale Erhöhungen oder Vertiefungen aufweisen, bevorzugt außerhalb des Dekorbereiches auf der Oberseite.

Tab. 1

| Gew.-% | Glas A | Glas B | Glas C | Glas D | Glas E | Glas F | Glas G | Glas H | Glas I |
|---|---|---|---|---|---|---|---|---|---|
| $SiO_2$ | 44-57 | 53-63 | 57-62 | 47-52 | 40-50 | 63-73 | 50-66 | 45-60 | 45-75 |
| $Al_2O_3$ | 5-25 | 15-25 | 5-8 | 2-6 | 9-15 | 0-7 | 0-20 | 6-17 | 1-10 |
| $B_2O_3$ | 0-27 | 15-22 | 18-23 | 17-21 | 10-15 | 12-29 | 0-8 | 0-10 | 10-30 |
| $Li_2O$ | 0-10 | 2-7 | 2-6 | 3-5 | 0-4 | 0-6 | 0-12 | 0-7 | 0-5 |
| $Na_2O$ | 0-10 | 0-1 | 0-1 | 1-5 | 1-4 | 0-8 | 7-15 | 0-7 | 0-10 |
| $K_2O$ | 0-10 | 0-1 | 0-4 | 5-10 | 0-3 | 0-8 | 0-3 | 0-7 | 0-5 |
| CaO | 0-4 | 1-4 | 1-2 | 0-2 | 0-3 | 0-5 | 0-10 | 0-12 | 0-4 |
| MgO | 0-3 | 1-4 | 0-2 | 0-1 | 0-3 | 0,1-5 | 3-8 | 0-9 | 0-4 |
| BaO | 0-4 | 0-1 | 0-2 | 0-2 | 16-24 | 0-5 | 0-15 | 13-27 | 1-10 |
| SrO | 0-4 | 1-4 | 0,5-2 | 0-1 | 0-2 | 0-4 | 0-4 | 0-4 | 0-4 |
| ZnO | 0-15 | 1-4 | 0-2 | 0-3 | 8-15 | 0-15 | 0-5 | 3-17 | 0-20 |
| $TiO_2$ | 0-3 | 0-1 | 0-2 | 0-2 | 0-3 | 0-5 | 0-5 | 0-2 | 0-2 |
| $ZrO_2$ | 0-7 | 1-4 | 2-5 | 0-2 | 0-4 | 0-5 | 0-5 | 0-7 | 0-7 |
| $As_2O_3$ | 0-1 | 0-1 | 0-1 | 0-1 | 0-1 | 0-1 | 0-1 | 0-1 | 0-1 |

(fortgesetzt)

| Gew.-% | Glas A | Glas B | Glas C | Glas D | Glas E | Glas F | Glas G | Glas H | Glas I |
|---|---|---|---|---|---|---|---|---|---|
| $Sb_2O_3$ | 0-15 | 0-1 | 0-1 | 0-1 | 0-15 | 0-1 | 0-1 | 0-1 | 0-1 |
| F | 0-3 | 0-1 | 0-1 | 0-1 | 0-1 | 0-1 | 0-1 | 0-1 | 0-2 |

Tab. 2

| Gew.-% | Glas K | Glas L | Glas M | Glas N | Glas O | Glas P |
|---|---|---|---|---|---|---|
| $SiO_2$ | 25-55 | 35-65 | 30-54 | 6-20 | 6-15 | 45-65 |
| $Al_2O_3$ | 3-18 | - | 0-17,5 | 0-5 | - | 0-15 |
| $B_2O_3$ | 5-25 | - | 13-28 | 20-38 | 20-28 | 5-30 |
| $Li_2O$ | 0-12 | 0-6 | 3-6 | - | - | 0-10 |
| $Na_2O$ | 3-18 | 0-6 | 4-10 | - | - | 0-10 |
| $K_2O$ | 3-18 | 0-6 | 0-2 | - | - | 0-10 |
| CaO | 3-17 | 0-12 | 0-6 | - | - | 0-5 |
| MgO | 0-10 | 0-12 | 0-4 | - | - | 0-5 |
| BaO | 0-12 | 0-38 | - | - | - | 0-20 |
| SrO | - | 0-16 | 0-4 | - | - | 0-16 |
| ZnO | - | 17,5-38 | 3-13 | 35-70 | 58-70 | 0-35 |
| $TiO_2$ | 0-5 | - | 0-2 | 0-5 | - | 0-5 |
| $ZrO_2$ | 0-3 | - | 0-2 | 0-5 | - | 0-5 |
| $Bi_2O_3$ | - | - | - | 0-20 | - | 0-20 |
| CoO | - | - | - | 0-5 | - | - |
| $Fe_2O_3$ | - | - | - | 0-5 | - | - |
| MnO | - | - | - | 0-10 | 0,5-1 | - |
| $CeO_2$ | - | - | - | - | 0-3 | - |
| F | - | - | 0-3,3 | 0-6 | - | - |

Ergebnisse

Bei der Untersuchung der akustischen Eigenschaften wurde festgestellt, dass es bei der Bestimmung der Lautheit auf die Größe der gemessenen Substratplatten ankommt. Kleine Platten einer Größe von 250 x 380 mm² zeigen geringere Lautheitswerte als die standardmäßig verwendeten Platten von 500 x 550 mm². Dagegen führen die Messungen der Schärfe bei kleinen und großen Platten im Rahmen der Messfehler zu den gleichen Ergebnissen.

In Tabelle 3 sind die Ergebnisse von Messungen an kleinen Platten (250 x 380 mm²) zusammengestellt. Die Flächenbelegung bei den Beispielen gemäß Tabelle 3 betrug 100 %, es wurde also kein spezielles Muster gemäß Fig. 1 bis 4 ausgewählt, so dass die betreffenden Farben unabhängig vom Einfluss eines Musters geprüft wurden.

Der Vergleich der eingebrannten Farben 2, 3 und 5 zeigt, dass mit vergleichbaren Ra-Werten von 0,20 bzw. 0,21 $\mu$m deutlich unterschiedliche akustische Eigenschaften erzielt wurden. Die Farbe 4, die einen sehr hohen Ra-Wert von 1,02 $\mu$m aufweist, liegt mit der Lautheit deutlich unterhalb der der Farben 2, 3, 5.

Dagegen korrelieren die Rauheitsanteile rms (10...20 mm⁻¹) ($\mu$m) und Rms (20...50 mm-1) ($\mu$m) mit den Schärfewerten. Es ist ersichtlich, dass die Farbe 6 sowohl hinsichtlich Lautheit, als auch Schärfe die besten Werte zeigt. Damit korrelieren auch die entsprechenden Werte von rms (10...20 mm⁻¹) und rms (20...50 mm⁻¹), die mit 0,0178 und 0,0048 $\mu$m sehr niedrig sind. Auch die Farben 1, 8 und insbesondere 10 sind als annehmbar einzustufen.

Von der Größe der Pigmente kann nicht auf die akustischen Parameter geschlossen werden. So waren die akustischen Eigenschaften von Farben, die sich nur durch die Pigmentart und Pigmentgröße unterschieden, trotz gleicher bzw. vergleichbarer Rauheitswerte Ra deutlich verschieden.

Ferner hat auch der Belegungsgrad (Flächenbelegung), d.h. wieviel % der Substratoberfläche mit Dekor versehen war, im Bereich von 3% bis 100% keinen starken Einfluss auf die akustischen Eigenschaften. In Abhängigkeit von der Farbe kann sogar ein Dekor mit geringerem Belegungsgrad schlechter bewertete akustische Eigenschaften aufweisen als z.B. ein zu 100 % mit derselben Farbe beschichtetes Dekor. Dabei variieren in diesem Flächenbelegungsbereich die Werte für die Schärfe höchstens um ca. 0,2 acum, die der Lautheit um ca. 1 sone. Daher gelten die Aussagen für einen weiten Bereich der Flächenbelegung von 3% bis 100%.

Die Schichtdicken der eingebrannten Farben lagen zwischen 1 und 10 $\mu$m.

In Tabelle 4 sind die Geräusch-Analysen zusammengestellt, die an Platten der Größe 500 x 550 mm2 durchgeführt wurden. Dabei gelten folgende Standardabweichungen bei Auswertung einer größeren Anzahl von Analysen: Lautheit ca. 1,0 sone; Schärfe ca. 0,1 - 0,2 acum. Hierbei wurden auch unterschiedliche Muster mit unterschiedlichen Flächenbelegungen (3% bis 50 %) verwendet. Es sind auch unterschiedlich schnelle Bewegungen aufgeführt. Die mit "langsam" gekennzeichneten Bewegungen entsprechen den oben erwähnten Bewegungen mit 0,08 m/s, während die "schnellen" Bewegungen den oben erwähnten Bewegungen mit 0,16 m/s entsprechen, die zu höheren Werten bei der Lautheit und Schärfe führen.

Wiederum zeigt die Farbe 6 die besten Ergebnisse.

Tabelle 3: kleine Platten (250 x 380 mm$^2$) mit 100% Bedruckung (Einflussgröße der Farbe musterunabhängig)

| Farbe | 1 | 1a | 1b | 2 | 3 | 4 | 5 | 6 | 7 | 8 | 9 | 10 | 10a | 10b | 11 |
|---|---|---|---|---|---|---|---|---|---|---|---|---|---|---|---|
| Glasfluss | TypA (Zusammensetzung wie Bsp.3) | TypA | TypA | TypA | TypA (Zusammensetzung wie Bsp.3) | TypA | TypA (Zusammensetzung wie Bsp.3) | TypA | | Typ C | Typ F (73% SiO$_2$ 7% Al$_2$O$_3$ 15% B$_2$O$_3$ 4% R$_2$O+ R O) | Typ A | Typ A (Zusammensetzung vgl. Bsp.4) | Typ C | Zusamsammensetzung wie Bsp.7 |
| Ausführungsbeispiel | | 8 | 9 | 6 | | 2 | | 3 | 7 | 1 | | 4 | | 5 | |
| D90 | 4 μm | 4 μm | 4 μm | 4 μm | 4 μm | 4 μm | 4 μm | 4 μm | 10 μm | 4 μm | 4 μm | 4 μm | 4 μm | 4 μm | 4 μm |
| Pigmentanteil | 20% | 10% | 5% | 15% | 10% | 30% | 2% | 0% | 0% | 0% | 2% | 0% | 0% | 0% | 0% |
| D90-Pigment | <1 μm | 2 μm | 2 μm | 4 μm | 4 μm | 4,5 μm | 30 μm | - | - | - | 30 μm | - | - | - | - |
| Ra (μm) | 0,17 | 0,13 | 0,18 | 0,21 | 0,21 | 1,02 | 0,20 | 0,07 | 2,5 | 0,24 | 0,25 | 0,2 | 0,2 | 0,27 | 0,49 |
| Rz (μm) | 7 | 2,78 | 8,46 | 9,4 | 14,25 | 39,8 | 7,8 | 4,2 | 42,4 | 7,67 | 8,6 | 1,54 | 1,63 | 8,4 | 9,1 |
| Rms (2... 10 mm-1) (μm) | 0,140 | 0,103 | 0,142 | 0,185 | 0,228 | 0,320 | 0,251 | 0,076 | 1,250 | 0,243 | 0,257 | 0,179 | 0,185 | 0,236 | 0,459 |
| Rms (10...20 mm-1) (μm) | 0,0623 | 0,057 | 0,040 | 0,1310 | 0,0959 | 0,3208 | 0,091 | 0,0178 | 1,1327 | 0,0958 | 0,125 | 0,019 | 0,024 | 0,098 | 0,2742 |
| Rms (20...50 mm-1) (μm) | 0,0404 | 0,035 | 0,0124 | 0,1212 | 0,0645 | 0,5473 | 0,045 | 0,0048 | 1,3563 | 0,0355 | 0,077 | 0,010 | 0,017 | 0,042 | 0,1850 |
| Lautheit (sone) | 4,7 | 3,7 | 2,7 | 6,6 | 5,5 | 4 | 5 | 2,0 | 9,3 | 5,1 | 6,6 | 3,2 | 3,5 | 5,5 | 6,7 |
| Schärfe (acum) | 2,6 | 2,8 | 2,5 | 3,1 | 2,7 | 3,6 | 3,1 | 2,2 | 3,3 | 2,8 | 3,4 | 2,3 | 2,4 | 2,6 | 3,0 |
| Bewertung Lautheit | + | ++ | ++ | - | + | + | + | ++ | - | + | - | ++ | ++ | + | - |

(fortgesetzt)

| | 1 | 1a | 1b | 2 | 3 | 4 | 5 | 6 | 7 | 8 | 9 | 10 | 10a | 10b | 11 |
|---|---|---|---|---|---|---|---|---|---|---|---|---|---|---|---|
| Farbe | | | | | | | | | | | | | | | |
| Glasfluss | TypA (Zusammensetzung wie Bsp.3) | TypA | TypA | TypA | TypA (Zusammensetzung wie Bsp.3) | TypA | TypA (Zusammensetzung wie Bsp.3) | TypA | | Typ C | Typ F (73% $SiO_2$ 7% $Al_2O_3$ 15% $B_2O_3$ 4% $R_2O$+ RO) | Typ A | Typ A (Zusammensetzung vgl. Bsp.4) | Typ C | Zusammensetzung wie Bsp.7 |
| Bewertung Schärfe | + | + | ++ | - | + | - | - | ++ | - | + | - | ++ | ++ | + | 0 |

Tabelle 4: Ergebnisse der Topografie- und Geräusch-Analysen von Platten der Größe 500 x 550 mm$^2$. Hier sind Mittelwerte zusammengefasst, die bei den Linienmustern aus den Mustern 4-8 (alle Muster > 3% Flächenanteil), bei den Punktmustern aus den Mustern 9-16 errechnet wurden (Verwendung des Stahl-Emaille-Topfes)

| Farbe | 6 | 2 | 1 | 4 | 3 |
|---|---|---|---|---|---|
| Lautheit Linienmuster Kreis Mittelwert Flächenbelegung 3% ... 50% langsam - 0,08 m/s (sone) | 3,1 | 8,0 | 6,8 | 6,2 | 6,8 |
| Lautheit Linienmuster Kreis Mittelwert Flächenbelegung 3% ... 50% schnell - 0,16 m/s (sone) | 4,6 | 9,6 | 9,5 | 5,7 | 8,3 |
| Schärfe Linienmuster Kreis Mittelwert Flächenbelegung 3% ... 50% langsam - 0,08 m/s (acum) | 1,9 | 3,4 | 2,6 | 3,6 | 2,8 |
| Schärfe Linienmuster Kreis Mittelwert Flächenbelegung 3% ... 50% schnell - 0,16 m/s (acum) | 2,3 | 3,8 | 3,0 | 3,6 | 2,9 |
| Schärfe Punktmuster Linearbewegung Mittelwert 8 Varianten - langsam 0,08 m/s (acum) | 2,6 | 3,3 | 2,6 | 3,4 | 2,8 |
| Bewertung | ++ | - | + | (+) | 0 |

Tabelle 5 zeigt die Ergebnisse der Geräuschanalysen für weitere Ausführungsbeispiele. Für die Geräuschanalysen gelten folgende Standardabweichungen bei Auswertung einer größeren Anzahl von Analysen: Lautheit ca. 1,0 sone; Schärfe ca. 0,1 - 0,2 acum; "schnell" entspricht einer Geschwindigkeit von 0,16 m/s, "langsam" einer Geschwindigkeit von 0,08 m/s - der Standard ist "langsam". Tabelle 5 zeigt auch die Beobachtung auf, dass die Lautheits- und Schärfe-Werte, die mit einem anderen Topf bestimmt werden (hier: Edelstahl Topf im Vergleich zum Stahl-Emaille-Topf) sich in den Absolut-Werten unterscheiden, dass aber die Reihenfolge der entsprechenden Werte sich im Rahmen der Standard-Abweichungen nicht verändert. Daraus folgt, dass die "Geräuschoptimierung" einer Kochfläche nicht für jeden Topf "neu" ermittelt werden muss, sondern dass sich die Ergebnisse, die mit einem Topf gewonnen werden, auf die Situation mit anderen Töpfen übertragen lassen bzw. dass die im Sinne dieser Patentschrift als "geräuschoptimiert" bezeichneten Kochflächen für alle Topfarten als "geräuschoptimiert" anzusehen sind.

Besonders gut sind die Beispiele 10 und 10a geeignet, bei denen keine Pigmente zugesetzt wurden, sondern die Farbkörper während des Einbrennprozesses (nach dem Glattfließen der Glasfritte) in der Dekorschicht auskristallisiert sind.

Tabelle 5

| Farbe | 7 | 9 | 5 | 11 | 8 | 10 | 10a |
|---|---|---|---|---|---|---|---|
| Lautheit (sone) Vollfläche kleine Platten (Edelstahltopf) | 6,8 | 5,5 | 4,3 | 5,4 | 5,1 | 2,9 | 3,4 |
| Schärfe (acum) Vollfläche, kleine Platten (Edelstahltopf) | 3,5 | 3,7 | 3,2 | 3,2 | 3,2 | 2,7 | 2,6 |
| Lautheit (sone) Vollfläche kleine Platten (Stahl-Emaille-Topf) | 9,3 | 6,6 | 5,0 | 6,7 | 5,3 | 3,2 | 3,5 |
| Schärfe (acum) Vollfläche, kleine Platten (Stahl-Emaille-Topf) | 3,3 | 3,4 | 3,1 | 3,0 | 2,8 | 2,3 | 2,4 |

Ausführungsbeispiele

Beispiel 1 (Farbe 8)

Es wurden 50 g in einer Rührwerkskugelmühle (trocken) mit Sichter aufgemahlenen Glasfritte (Glas C (Angaben in Gew.%: 58% $SiO_2$, 6 % $Al_2O_3$, 20% $B_2O_3$, 6% $R_2O$, 10% RO+ $RO_2$; $T_g$ = 460°C, $E_w$= 650°C; mit $T_g$ = Transformationstemperatur und $E_w$ = Erweichungstemperatur), Partikelgröße D50 = 1,5 $\mu$m D90 = 4 $\mu$m, agglomeratfrei) mit 60 g Siebdruckanpastmed um versetzt, dispergiert und mit einem Dreiwalzwerk so homogenisiert, dass keine Agglomerate mehr vorhanden waren. Die erhaltene Paste wurde per Siebdruck (140er Gewebe, Vollflächendekor auf 250 x 380mm$^2$)

auf 4 mm dickes transparent eingefärbtes Lithium-Aluminium-Silikat-Grünglas aufgetragen. Eine bedruckte Grünglasplatte wurde im Ofen gleichzeitig eingebrannt und keramisiert ($T_{max}$ 935°C, Haltezeit 10 min). Der $R_a$-Wert dieser Platte betrug 0,24 $\mu$m; $rms_{10\,mm\text{-}1...\,20\,mm\text{-}1}$ : 0,096 $\mu$m, $rms_{20\,mm\text{-}1\,..\,50\,mm\text{-}1}$ : 0,0355 $\mu$m; der Lautheitswert 5,1 sone und der Schärfewert 2,8 acum. Eine andere Grünglasplatte, die identisch hergestellt wurde (Vergleichsbeispiel), wurde bei einer niedrigeren Maximaltemperatur auch während eines Keramisierungsprozesses eingebrannt ($T_{max}$ 860°C, Haltezeit 15 min), Der $R_a$-Wert dieser Platte betrug 0,27 $\mu$m; $rms_{10\,mm\text{-}1...\,20\,mm\text{-}1}$ :0,11 $\mu$m, $rms_{20\,mm\text{-}1...\,60\,mm\text{-}1}$ : 0,068 $\mu$m, der Lautheitswert 5,8 sone und der Schärfewert 3,1 acum. Obwohl die Glasfritte auch hier geschmolzen war, ergaben sich wegen der niedrigeren Maximaltemperatur schlechtere Werte für die Lautheit und Schärfe.

Beispiel 2 (Farbe 4) - Vergleichsbeispiel

Zur Herstellung von Farbe 4 wurden 35 g einer mittels einer Rührwerkskugelmühle (trocken) mit Sichter aufgemahlenen Glasfritte (Glas A, ( Angaben in Gew.%: 52% $SiO_2$, 17% $Al_2O_3$, 19% $B_2O_3$, 4% $R_2O$, 8% RO+ $RO_2$, $T_g$=580°C, $E_w$=750°C), Korngröße D50 = 1,5 $\mu$m, D90 =4 $\mu$m) mit 65 g Siebdruckanpastmedium und 15 g strukturgebende homogen kugelförmige Methylpolysiloxanpartikel mit einer Teilchengröße von 4,5 $\mu$m versetzt. Diese Paste wurde mittels eines Dispermaten 10 Min homogenisiert. Mittels eines 140er Siebes, wurden die Punktmuster 11 und 12 mit dieser Farbe eine Schicht per Siebdruck auf Grünglas (500 mm x 550 mm, Dicke 4 mm) aufgebracht und bei 180 °C für 30 Min angetrocknet. Der Einbrand erfolgte bei ca. 900 °C gleichzeitig mit der Keramisierung des Grünglases zur transparenten Glaskeramik. Dieses eingebrannte Dekor war weißlich, semitransparent und matt. Der Ra-Wert betrug 1,02 $\mu$m bei beiden Mustern, $rms_{10\,mm\text{-}1...\,20\,mm\text{-}1}$ :0,32 $\mu$m, $rms_{20\,mm\text{-}1...\,50\,mm\text{-}1}$ : 0,55 $\mu$m. Die Lautheits- und Schärfewerte betrugen bei Punktmuster 11: 5 sone und 3,6 acum); bei Punktmuster 12: 5 sone und 3,5 acum. Das Topfschiebegeräusch war sehr scharf, aber leise und kann daher als Signalgeräusch eingesetzt werden.

Beispiel 3 (Farbe 6)

Es wurden 50 g in einer Rührwerkskugelmühle (trocken) mit Sichter aufgemahlenen Glasfritte (Glas A, ( Angaben in Gew.%: 52% $SiO_2$, 17% $Al_2O_3$, 19% $B_2O_3$, 4% $R_2O$, 8% RO, + $RO_2$, $T_g$=580°C, $E_w$=750°C), Korngröße D50 = 1,5 $\mu$m, D90 = 4 $\mu$m, agglomeratfrei) mit 60 g S ebdruckanpastmedium versetzt und mit einem Dreiwalzwerk so homogenisiert, dass keine Agglomerate mehr vorhanden waren. Die erhaltene Paste wurde per Siebdruck (140er Gewebe, Vollflächendekor auf 250 x 380 mm² und mit Punktraster 11 und 12 auf 500 mm x 550 mm)) auf eine bereits keramisierte weißlichtransluzente Glaskeramikplatte mit der Dicke von 4 mm aufgetragen und anschließend bei 850°C/1h eingebrannt. Der $R_a$-Wert der transparenten Glasur betrug 0,07 $\mu$m, $rms_{10\,mm\text{-}1...\,20\,mm\text{-}1}$ :0,018 $\mu$m, $rms_{20\,mm\text{-}1...\,50\,mm\text{-}1}$ : 0,005 $\mu$m. Die Platte mit dem Vollflächendekor hatte eine Lautheit von 2 - sone und die Schärfe 2,2 acum. Vergleichbare Werte der Schärfe wurden auch mit Punktmuster 11 und 12 erhalten (Lautheit 2,5 sone, Schärfe 2,4 acum).
Farbe 6 zeigte deutlich das beste Ergebnis bezüglich der akustischen Eigenschaften. Auch die rms-Werte lagen entsprechend niedrig.

Beispiel 4 (Farbe 10)

In Glas A (Angaben in Gew.%: 52 % $SiO_2$, 17 % $Al_2O_3$, 19 % $B_2O_3$, 4 % $R_2O$, 8 % RO+ $RO_2$, $T_g$=580°C, $E_w$=750°C) wurden zusätzlich 25% $TiO_2$ so eingeschmolzen, dass sich das Pigment vollständig in der Glasschmelze bei ca. 1450°C aufgelöst hat und ein homogenes Glas entstand. Davon wurden 50 g in einer Rührwerkskugelmühle (trocken) mit Sichter aufgemahlen (Korngröße D50= 1,5 $\mu$m, D90=4 $\mu$m, agglomeratfrei) und mit 75 g Siebdruckanpastmedium versetzt und mit einem Dreiwalzwerk so homogenisiert, dass keine Agglomerate mehr vorhanden waren. Die erhaltene Paste wurde per Siebdruck (140er Gewebe, Vollflächendekor auf 250 x 380 mm2) auf ein transparent eingefärbtes Grünglas aufgetragen. Der Einbrand erfolgte gleichzeitig mit der Keramisierung des Grünglases zu einer dunklen Glaskeramik (CERAN® Hightrans eco) (Tmax 935°C, Haltezeit 10 min), und das Dekor hatte eine hellblauen Farbe. Der Ra-Wert betrug 0,20 $\mu$m, $rms_{10\,mm\text{-}1...\,20\,mm\text{-}1}$ :0,019 $\mu$m, $rms_{20\,mm\text{-}1...\,50\,mm\text{-}1}$ : 0,010 $\mu$m. Die Lautheit betrug 3,2 sone und die Schärfe 2,3 acum und erfüllt somit die Anforderungen an ein geräuschoptimiertes Dekor.

Beispiel 5 (Farbe 10b)

In Glas C (Angaben in Gew.%: 58 % $SiO_2$, 6 % $Al_2O_3$, 20 % $B_2O_3$, 6 % $R_2O$, 10% RO+$RO_2$; $T_g$=460°C, $E_w$=650°C) wurden zusätzlich 20% $TiO_2$ so eingeschmolzen, dass sich das Pigment vollständig in der Glasschmelze bei ca. 1450°C aufgelöste und ein homogenes Glas entstand. Davon wurden 50 g in einer Rührwerkskugelmühle (trocken) mit Sichter aufgemahlen (Korngröße D50= 1,5 $\mu$m, D90=4 $\mu$m, agglomeratfrei) und mit 75 g Siebdruckanpastmedium versetzt und mit einem Dreiwalzwerk so homogenisiert, dass keine Agglomerate mehr vorhanden waren. Die erhaltene Paste wurde per Siebdruck (140er Gewebe, Vollflächendekor auf 250 x 380 mm²) auf ein transparent eingefärbtes Grünglas aufgetragen. Der Einbrand erfolgte gleichzeitig mit der Keramisierung des Grünglases zu einer dunklen Glaskeramik (CERAN® Hightrans eco) ($T_{max}$ 935°C, Haltezeit 10 min) und das Dekor war hellgrau-weiß. Der $R_a$-Wert betrug 0,27 $\mu$m, $rms_{10mm-1...20 mm-1}$ :0,098 $\mu$m, $rms_{20mm-1...50mm-1}$ : 0,042 $\mu$m. Die Lautheit betrug 5,5 sone und die Schärfe 2,6 acum und erfüllt somit die Anforderungen an ein geräuschoptimiertes Dekor.

Beispiel 6 (Farbe 2) - Vergleichsbeispiel

Zur Herstellung von Farbe 2 wurden 42,5 g einer aufgemahlenen (Nassmahlung) Glasfritte (Angaben in Gew.%: Glas A (52 % $SiO_2$, 17 % $Al_2O_3$, 19 % $B_2O_3$, 4 % $R_2O$, 8 % RO+ $RO_2$, $T_g$=580°C, $E_w$=750°C), Korngröße D50 = 1,5 $\mu$m, D90 = 4 $\mu$m) und 7,5 g mit einer Pigmentmischung aus weißen und schwarzen Pigmenten (Korngröße D90 4 $\mu$m) mit 60 g Siebdruckanpastmedium versetzt. Diese Paste wurde mittels eines Dreiwalzwerkes homogenisiert. Per Siebdruck (140er Gewebe) wurden Streifenraster 4 und 6 auf transparen: eingefärbtes Grünglas (500x550x4 mm³) gedruckt. Der Einbrand erfolgte gleichze tig mit der Keramisierung des Grünglases zu einer dunklen Glaskeramik (CERAN® Hightrans eco) ($T_{max}$ 935°C, Haltezeit 10 min). Diese eingebrannten Dekore waren grau, der $R_a$-Wert betrug 0,21 $\mu$m, $rms_{10 mm-1...20 mm-1}$ :0,13 $\mu$m, $rms_{20 mm-1...50 mm-1}$ : 0,12 $\mu$m, bei be den Mustern. Die Lautheits- und Schärfewerte betrugen bei beiden Streifenmustern 1C,1 sone 4,0 acum (4) und 9,9 sone / 3,5 acum (6). Diese Dekore erfüllen nicht die Anforderung eines geräuschoptimierten Dekores.

Beispiel 7 (Farbe 7) - Vergleichsbeispiel

Es wurden 50 g einer mittels einer Rührwerkskugelmühle (trocken) mit Sichter aufgemahlenen Glasfritte (Angaben in Gew.%: 80 % $SiO_2$, 2 % $Al_2O_3$, 14 % $B_2O_3$, 4 % $R_2O$), Korngröße D90 = 10 $\mu$m) mit 60 g Siebdruckanpastmedium versetzt und mit einem Dreiwalzwerk so homogenisiert, dass nahezu keine Agglomerate mehr vorhanden waren. Die erhaltene Paste wurde per Siebdruck (140er Gewebe, Vollflächendekor auf 250 x 380 mm²) auf eine bereits keramisierte weiße Glaskeramikplatte mit der Dicke von 4 mm aufgetragen und anschließend bei 950°C/1h eingebrannt. Der $R_a$-Wert der weißlichtransparenten, unpigmentierten Glasur betrug 2,5 $\mu$m, $rms_{10 mm-1...20 mm-1}$ :0,096 $\mu$m, $rms_{20 mm-1...50 mm-1}$ : 0,0355 $\mu$m, d e Lautheit 9,3 sone und die Schärfe 3,3 acum. Dieses Dekor erfüllt nicht die Anforderungen an ein geräuschoptimiertes Dekor.

Beispiel 8 (Farbe 1a)

Es wurden 45 g in einer Rührwerkskugelmühle (trocken) mit Sichter aufgemahlenen Glasfritte (Glas A, Angaben in Gew.%: 52% $SiO_2$, 17% $Al_2O_3$, 19% $B_2O_3$, 4% $R_2O$, 8% RO+ $RO_2$, $T_g$=580°C, $E_w$=750°C), Korngröße D50= 1,5 $\mu$m, D90=4 $\mu$m, agglomeratfrei) mit 5 g einer Pigmentmischung mit D90 = 2$\mu$m und 60 g Siebdruckmedium versetzt und mit einem Dreiwalzwerk so homogenisiert, dass keine Agglomerate mehr vorhanden waren. Die erhaltene Paste wurde per Siebdruck (140er Gewebe, Vollflächendekor auf 250 x 380 mm²) auf eine transparente Glasplatte mit der Dicke von 4 mm aufgetragen und anschließend, während der Keramisierung der Glasplatte zu einer transparenten Glaskeramik (Tmax 935°C, Haltezeit 10 min), eingebrannt. Der Ra-Wert der Glasur betrug 0,13 $\mu$m, $rms_{10 mm-1...20 mm-1}$ : 0,057 $\mu$m, $rms_{20 mm-1...50 mm-1}$ : 0,035 $\mu$m. Die Platte mit dem Vollflächendekor hatte eine Lautheit von 3,7 sone und die Schärfe 2,8 acum und erfüllt somit die Anforderungen an ein geräuschoptimiertes Dekor.

Beispiel 9 (Farbe 1b)

Es wurden 47,5 g in einer Rührwerkskugelmühle (trocken) mit Sichter aufgemahlenen Glasfritte (Glas A, Angaben in Gew.%: 52% $SiO_2$, 17% $Al_2O_3$, 19% $B_2O_3$, 4% $R_2O$, 8% RO+ $RO_2$, $T_g$=580°C, $E_w$=750°C), Korngröße D50= 1,5 $\mu$m, D90=4 $\mu$m, agglomeratfrei) mit 2,5 g einer Pigmentmischung mit D90 = 2$\mu$m und 60 g Siebdruckmedium versetzt und mit einem Dreiwalzwerk so homogenisiert, dass keine Agglomerate mehr vorhanden waren. Die erhaltene Paste wurde per Siebdruck (140er Gewebe, Vollflächendekor auf 250 x 380 mm²) auf eine transparente Glaskeramikplatte mit der Dicke von 4 mm aufgetragen und anschließend bei 850°C 1 h eingebrannt. Der Ra-Wert der Glasur betrug 0,18 $\mu$m, $rms_{10 mm-1...20 mm-1}$ : 0,04 $\mu$m, $rms_{20 mm-1...50 mm-1}$ : 0,012 $\mu$m. Die Platte mit dem Vollflächendekor hatte eine Lautheit von 2,7 sone und die Schärfe 2,5 acum und erfüllt somit die Anforderungen an ein geräuschoptimiertes Dekor.

Zusammenfassend ist festzustellen, dass es eine Reihe von Möglichkeiten gibt, die akustischen Eigenschaften zu verbessern.

So kann man mit geringen Partikelgrößen von Glasfluss und Pigment (z.B. D90 ≤ 4 $\mu$m) zwar Farben mit niedrigen Ra-Werten (< 0,3 $\mu$m) erhalten, aber einen wesentlichen Einfluss auf die akustischen Eigenschaften haben insbesondere die Agglomerate. Die Agglomerate in der Farbe können durch gezielte Verfahrensparameter reduziert werden, beginnend bei der Präparation der Ausgangsrohstoffe als auch während der Homogenisierung und Dispergierung zur Farbpaste. Die Farbpasten dürfen im Wesentlichen keine Agglomerate > 20 $\mu$m, bevorzugt > 10 $\mu$m, besonders

bevorzugt > 5 μm aufweisen.

Zur Vermeidung von Agglomeraten sind insbesondere Trockenmahlverfahren bevorzugt.

Ebenso wichtig ist die Anpassung der Einbrandparameter auf das Substrat und die jeweilige Farbe, um die gewünschten optimierten akustischen Eigenschaften zu erzeugen. Die Farbe an sich kann in einem recht großen Parameterbereich eingebrannt werden, um die Eigenschaften zu erfüllen, die bspw. an ein dekoriertes Kochfeld gestellt werden. Für die akustischen Eigenschaften jedoch muss der Bereich so ausgewählt werden, dass der Glasfluss vollständig aufgeschmolzen ist, die Pigmente gut in den Fluss eingebettet sind und weitergehende Effekte wie Veränderung der Oberfläche durch Verdampfungsprozesse, Oberflächenkristallisation des Glasflusses, Aufschwimmen der Pigmente, verhindert werden.

In diesem Zusammenhang ergibt sich aus den verschiedenen Untersuchungen, dass offensichtlich Dekore ohne Zusatz von Pigmenten besonders gut geeignet sind (Farbe 6). Auch Farbe 8 (ohne Pigmentzusätze) hat relativ gute Ergebnisse. Auch Farben mit geringem Pigmentanteil ergeben (in Kombination mit anderen Maßnahmen) verbesserte Geräuscheigenschaften (Farbe 1b).

Auch Farbe 10, bei der der Farbkörper in der Basisglasschicht auskristallisiert, zeigte gute Ergebnisse. Dies ist darauf zurückzuführen, dass auf diese Weise vermieden wird, dass sich nicht aufgeschmolzene Pigmentpartikel an der Dekoroberfläche befinden, die eine Geräuschbildung nachteilig beeinflussen könnten.

**Patentansprüche**

1. Beschichtetes Substrat, aus Glas oder Glaskeramik, vorzugsweise Induktionskochfläche aus Glaskeramik, mit einem geräuschoptimierten Dekor auf Glasbasis, mit einer Schärfe < 3 acum und einer Lautheit < 7 sone, gemessen nach DIN 45631/A1:2010-03 und DIN 45692:2009-08 auf dem mit dem Dekor beschichteten Substrat mit den Außenmaßen 500 x 550 mm$^2$, unter Verwendung eines Stahl-Emaille-Topfes mit emailliertem Boden der Firma Silit, des Typs Silargan® Bratentopf 20 cm Accento mit einem Durchmesser des Stellbodens von 17 cm und einem innen aufgenommenen Gewicht der Masse von 1 kg, unter Verschieben des Topfes mit einer Geschwindigkeit von 0,08 m/s, wobei der Topf eine emaillierten Boden mit einer Vickers-Härte von 635 +/- 50 HV 0,1/10 nach DIN EN ISO 6507-1 und einer Rauheit Ra zwischen 0,2 - 0,9 μm nach DIN EN ISO 4288:1998, einen Durchmesser des Stellbodens von 17 cm, eine Höhe von 8,5 cm, einen Innendurchmesser am oberen Rand von 20 cm und ein Leergewicht von 1,6 kg aufweist, , bei dem das Dekor einen mit Weißlicht-Interferenzmikroskopie bestimmten Rauheitsanteil rms im Bereich von 10 mm$^{-1}$ bis 20 mm$^{-1}$ kleiner als 0,1 Mikrometer aufweist (rms$_{10\,mm-1...20\,mm-1}$ < 0,1 μm), und einen Rauheitsanteil rms im Bereich von 20 mm$^{-1}$ bis 50 mm$^{-1}$ kleiner als 0,045 Mikrometer aufweist (rms$_{20\,mm-1...50\,mm-1}$ < 0,045 μm).

2. Beschichtetes Substrat nach Anspruch 1, bei dem das Dekor einen mit Weißlicht-Interferenzmikroskopie bestimmten Rauheitsanteil rms im Bereich von 10 mm$^{-1}$ bis 20 mm$^{-1}$ kleiner als 0,05 Mikrometer aufweist (rms$_{10\,mm-1...20\,mm-1}$ < 0,05 μm), bevorzugt rms$_{10\,mm-1...20\,mm-1}$ < 0,02 μm, und einen Rauheitsanteil rms im Bereich von 20 mm$^{-1}$ bis 50 mm$^{-1}$ kleiner als 0,03 Mikrometer aufweist (rms$_{20\,mm-1...50mm-1}$ < 0,03 μm), bevorzugt rms$_{20\,mm-1...50\,mm-1}$ < 0,015 μm.

3. Substrat nach Anspruch 1, oder 2, bei dem die Beschichtung aus einer eingebrannten Glasfritte auf der Basis von Silikatgläsern, Borosilikatgläsern, Zinksilikatgläsern, Zinkbo atgläsern, Zinkborosilikatgläsern, Bismutborosilikatgläsern, Bismutboratgläsern, Bismutsilikatgläsern, Phosphatgläsern, Zinkphosphatgläsern, Aluminosilikatgläsern oder Lithium-Aluminosilikatgläsern besteht.

4. Substrat nach einem der vorhergehenden Ansprüche, bei dem die Glasfritte Zusätze aus Pigmenten und/oder Füllstoffen und/oder strukturgebenden Partikeln aufweist.

5. Substrat nach einem der vorhergehenden Ansprüche, das aus einer Glaskeramik, insbesondere aus einer LAS-Glaskeramik, insbesondere zur Verwendung als variable Kochfläche, insbesondere als variable Induktionskochfläche besteht.

6. Verfahren zum Dekorieren eines Substrates aus Glas oder Glaskeramik, insbesondere für eine Induktionskochfläche aus Glaskeramik, mit einem geräuschoptimierten Dekor auf Glasbasis mit geringer Schärfe und Lautheit, bei dem eine Glasfritte auf eine Partikelgröße von D90 von 10 Nanometer bis 50 Mikrometer, vorzugsweise von 20 Nanometer bis 10 Mikrometer, besonders bevorzugt von 2 bis 10 Mikrometer, gernahlen wird und mit einem Dispergiermedium versetzt und im Wesentlichen derat agglomeratfrei homogenisiert wird, dass im Wesentlichen keine Agglomerate > 20 Mikrometer, vorhanden sind, dann auf eine Oberfläche des Substrates appliziert und derart eingebrannt wird, dass die Oberfläche einen mit Weißlicht-Interferenzmikroskopie bestimmten Rauheitsanteil rms im Bereich von 10

mm$^{-1}$ bis 20 mm$^{-1}$ kleiner als 0,1 Mikrometer aufweist (rms$_{10\ mm\text{-}1...20\ mm\text{-}1}$ < 0,1 $\mu$m), und einen Rauheitsanteil rms im Bereich von 20 mm$^{-1}$ bis 50 mm$^{-1}$ kleiner als 0,045 Mikrometer aufweist (rms$_{20\ mm\text{-}1...50\ mm\text{-}1}$ < 0,045 $\mu$m), und dass das beschichtete Substrat eine Schärfe < 3 acum und eine Lautheit < 7 sone aufweist, gemessen nach DIN 45631/A1:2010-03 und DIN 45692:2009-08 auf dem mit dem Dekor beschichteten Substrat mit den Außenmaßen 500 x 550 mm$^2$, unter Verwendung eines Stahl-Emaille-Topfes mit emailliertem Boden der Firma Silit, des Typs Silargan® Braten to of 20 cm Accento mit einem Durchmesser des Stellbodens von 17 cm und einem innen aufgenommenen Gewicht der Masse von 1 kg, unter Verschieben des Topfes mit einer Geschwindigkeit von 0,08 m/s, wobei der Topf eine emaillierten Boden mit einer Vickers-Härte von 635 +/- 50 HV 0,1/10 nach DIN EN ISO 6507-1 und einer Rauheit Ra zwischen 0,2 - 0,9 $\mu$m nach DIN EN ISO 4288:1998, einen Durchmesser des Stellbodens von 17 cm, eine Höhe von 8,5 cm, einen Innendu-chmesser am oberen Rand von 20 cm und ein Leergewicht von 1,6 kg aufweist.

7. Verfahren nach Anspruch 6, bei dem das Dekor derart eingebrannt wird, dass die Oberfläche einen mit Weißlicht-Interferenzmikroskopie bestimmten Rauheitsanteil rms im Bereich von 10 mm$^{-1}$ bis 20 mm$^{-1}$ kleiner als 0,2 Mikrometer aufweist (rms$_{10\ mm\text{-}1...20\ mm\text{-}1}$ < 0,02 $\mu$m), und einen Rauheitsanteil rms im Bereich von 20 mm$^{-1}$ bis 50 mm$^{-1}$ kleiner als 0,015 Mikrometer aufweist (rms$_{20\ mm\text{-}1\cdots50\ mm\text{-}1}$ < 0,015 $\mu$m).

8. Verfahren nach Anspruch 6 oder 7, bei dem das Vermahlen und Homogenisieren der Glasfritte derart erfolgt, derart dass im Wesentlichen keine Agglomerate > 10 Mikrometer, besonders bevorzugt > 5 Mikrometer vorhanden sind.

9. Verfahren nach eirem der Ansprüche 6 bis 8, bei dem zum Mahlen der Glasfritte ein Trockenmahlverfahren, insbesondere mit Kugelmühlen-, Strahlmühlen-, Gegen- oder Luftverr ahlung, oder auch Kombinationen aus Kugelmühle und Strahlmühle, sowie Gegenstrahlmühlen, die mit überhitztem Dampf arbeiten, verwendet wird.

10. Verfahren nach eir em der Ansprüche 6 bis 9, bei dem der Glasfritte Zusatzstoffe, insbesondere Pigmente, Füllstoffe und/oder strukturgebende Partikel beigemischt werden und zusarr men damit homogenisiert werden.

11. Verfahren nach eir em der Ansprüche 6 bis 10, bei dem der Glasfritte nach dem Vermahlen maximal 20 Gew.-%, vorzugsweise 10 Gew.-%, weiter bevorzugt maximal 7 Gew.-%, besonders bevorzugt maximal 5 Gew.-%, an Pigmenten und/oder Füllstoffen zugesetzt werden.

12. Verfahren nach eir em der Ansprüche 6 bis 11, bei dem Pigmente und/oder Füllstoffe zugesetzt werden, die zusammen mit dem Glasfluss aufgeschmolzen und vermahlen werden, bevor das Dekor auf die Glasoberfläche appliziert wird.

13. Verfahren nach eir em der Ansprüche der Ansprüche 6 bis 12, bei dem als Substrat eine Glaskera mik, insbesondere eine LAS-Glaskeramik verwendet wird, auf die das Dekor im Grünglaszustand appliziert wird und das Dekor eingebrannt und wobei gleichzeitig das Grünglas keramisiert wird.

14. Verfahren nach eirem der Ansprüche der Ansprüche 6 bis 12, bei dem als Substrat eine Glaskeramik, insbesondere eine LAS-Glaskeramik verwendet wird, auf die das Dekor im keramisierten Zustand appliziert wird und das Dekor eingebrannt wird.

## Claims

1. A coated substrate, made of glass or glass ceramic, preferably an induction cooking surface of glass ceramic, comprising a noise-optimized glass-based decoration, having an acuteness < 3 acum and a loudness < 7 sone, measured according to DIN 45631/A1:2010-03 and DIN 45692:2009-08 on a substrate with the outer dimensions 500 x 550 mm$^2$ coated with the decoration, while using a steel-enamel pot having an enamel bottom of the company Silit, of the type Silargan® roasting pot 20 cm Accento with a diameter of the stand bottom of 17 cm and a weight of a mass of 1 kg received within the inside, while displacing the pot with a speed of 0.08 m/s, wherein the pot comprises an enamel bottom with a Vicker's hardness of 635 $\pm$ 50 HV 0.1/10 according to DIN EN ISO 6507-1 and a roughness Ra between 0.2 and 0.9 $\mu$m according to DIN EN ISO 4288:1998, a diameter of the stand bottom of 17 cm, a height of 8.5 cm, an inner diameter at the upper rim of 20 cm and an empty weight of 1.6 kg, wherein the decoration has a roughness portion determined by white light interference microscopy rms in the range of 10 mm$^{-1}$ to 20 mm$^{-1}$ being smaller than 0.1 micrometers (rms$_{10mm^{-1}...20\ mm^{-1}}$ < 0.1 $\mu$m), and a roughness portion rms in the range of 20 mm$^{-1}$ to 50 mm$^{-1}$ being smaller than 0.045 micrometers (rms$_{20\ mm^{-1}...50\ mm^{-1}}$< 0.045 $\mu$m).

**2.** The coated substrate according to claim 1, wherein the decoration has a roughness portion determined by white light interference microscopy rms in the range of 10 mm$^{-1}$ to 20 mm$^{-1}$ being smaller than 0.05 $\mu$m micrometers ($rms_{10mm}{}^{-1}{}_{...20\,mm}{}^{-1} < 0.05\ \mu m$), preferably $rms_{10\,mm}{}^{-1}{}_{...20\,mm}{}^{-1} < 0.02\ \mu m$, and a roughness portion rms in the range of 20 mm$^{-1}$ to 50 mm$^{-1}$ being smaller than 0.03 micrometers ($rms_{20\,mm}{}^{-1}{}_{...\,50\,mm}{}^{-1} < 0.03\ \mu m$), preferably $rms_{20\,mm}{}^{-1}{}_{...50\,mm}{}^{-1} < 0.015\ \mu m$.

**3.** The substrate according to any of claims 1 or 2, wherein the coating consists of a burnt-in glass frit based on silicate glasses, borosilicate glasses, zinc silicate glasses, zinc borate glasses, zinc borosilicate glasses, bismuth borosilicate glasses, bismuth borate glasses, bismuth silicate glasses, phosphate glasses, zinc phosphate glasses, aluminosilicate glasses, or lithium aluminosilicate glasses.

**4.** The substrate of any of the preceding claims, wherein the glass frit comprises additives of pigments and/or fillers and/or structure-providing particles.

**5.** The substrate of any of the preceding claims, consisting of a glass ceramic, in particular of a LAS glass ceramic, in particular for application as a variable cook-top, in particular as a variable induction cooking surface.

**6.** A method of decorating a substrate, made of glass or glass ceramic, in particular for an induction cooking surface of glass ceramic, comprising a noise-optimized glass-based decoration having a small acuteness and loudness, wherein a glass frit is ground to a particle size of D90 of 10 nanometers to 50 micrometers, preferably of 20 nanometers to 10 micrometers, particularly preferred of 2 to 10 micrometers, is mixed with a dispersing medium and is homogenized substantially agglomerate-free, so that essentially there are no agglomerates > 20 micrometers, is thereafter applied to a surface of the substrate and burnt in, such that the coated substrate has a roughness portion determined by white light interference microscopy rms in the range of 10 mm$^{-1}$ to 20 mm$^{-1}$ being smaller than 0.1 micrometers ($rms_{10mm}{}^{-1}{}_{...20\,mm}{}^{-1} < 0.1\ \mu m$), and a roughness portion rms in the range of 20 mm$^{-1}$ to 50 mm$^{-1}$ being smaller than 0.045 micrometers ($rms_{20\,mm}{}^{-1}{}_{...50\,mm}{}^{-1} < 0.045\ \mu m$), and that the coated substrate has an acuteness < 3 acum and/or a loudness < 7 sone, measured according to DIN 45631/A1:2010-03 and DIN 45692:2009-08 on the substrate with the outer dimensions 500 x 550 mm$^2$ coated with the decoration, using a steel-enamel pot with an enamel bottom of the company Silit, of the type Silargan® roasting pot 20 cm Accento having a diameter of the standing bottom of 17 cm and a weight of a mass of 1 kg received within the inside, while displacing the pot at a speed of 0.08 m/s, wherein the pot comprises an enamel bottom with a Vicker's hardness of 635 $\pm$ 50 HV 0.1/10 according to DIN EN ISO 6507-1 and a roughness Ra between 0.2 and 0.9 $\mu$m according to DIN EN ISO 4288:1998, a diameter of the stand bottom of 17 cm, a height of 8.5 cm, an inner diameter at the upper rim of 20 cm and an empty weight of 1.6 kg.

**7.** The method according to claim 6, wherein the decoration is burnt-in in such a way that the surface of a roughness portion determined by white light interference microscopy rms in the range of 10 mm$^{-1}$ to 20 mm$^{-1}$ is smaller than 0.2 micrometers ($rms_{10\,mm}{}^{-1}{}_{...20\,mm}{}^{-1} < 0.2\ \mu m$), and a roughness portion rms in the range of 20 mm$^{-1}$ to 50 mm$^{-1}$ is smaller than 0.015 micrometers ($rms_{20\,mm}{}^{-1}{}_{...50\,mm}{}^{-1} < 0.015\ \mu m$).

**8.** The method according to claim 6 or 7, wherein the grinding and homogenizing of the glass frit is performed such that substantially no agglomerates > 10 micrometers, preferably > 5 micrometers are present.

**9.** The method according to any of claims 6 to 8, wherein for grinding the glass frit a dry grinding process is used, in particular with sphere grinding, jet grinding, counter grinding or air grinding, or use in combinations of sphere grinders and jet grinders, as well as counter-jet grinders, working with super-heated steam.

**10.** The method according to any of claims 6 to 9, wherein the glass frit is mixed with additives, in particular pigments, fillers and/or structure-providing particles, and is homogenized therewith.

**11.** The method according to any of claims 6 to 10, wherein to the glass frit after grinding a maximum of 20 wt.-% of pigments and/or fillers are admixed , preferably 10 wt.-%, more preferably a maximum of 7 wt.-%, particularly preferred a maximum of 5 wt.-%.

**12.** The method according to any of claims 6 to 11, wherein pigments and/or fillers are admixed which are molten together with the glass flux and are ground, before the decoration is applied to the glass surface.

**13.** The method according to any of claims 6 to 12, wherein a glass ceramic, in particular a LAS glass ceramic is used as a substrate, onto which the decoration is applied in the green-glass state and the decoration is burnt-in, while the green glass is ceramized simultaneously.

14. The method according to any of claims 6 to 12, wherein a glass ceramic, in particular a LAS glass ceramic is used as a substrate, onto which the decoration is applied in the ceramized state and the decoration is burnt-in thereafter.

**Revendications**

1. Substrat revêtu, en verre ou en vitrocéramique, de préférence surface de cuisson par induction en vitrocéramique, comprenant une décoration optimisée sur le plan acoustique à base de verre, ayant une acuité < 3 acum et un volume sonore < 7 sone, mesurés selon DIN 45631/A1:2010-03 et DIN 45692:2009-08 sur le substrat revêtu avec la décoration ayant les dimensions extérieures 500 x 550 mm$^2$, en utilisant une casserole en acier émaillé à fond émaillé de la société Silit, de type plat de cuisson Silargan® Accento de 20 cm ayant un diamètre du fond de 17 cm et un poids logé à l'intérieur d'une masse de 1 kg, avec déplacement de la casserole à une vitesse de 0,08 m/s, la casserole présentant un fond émaillé ayant une dureté de Vickers de 635 $\pm$ 50 HV, 0,1/10 selon DIN EN ISO 6507-1 et une rugosité Ra comprise entre 0,2 et 0,9 $\mu$m selon DIN EN ISO 4288:1998, un diamètre du fond de 17 cm, une hauteur de 8,5 cm, un diamètre intérieur au niveau du bord supérieur de 20 cm et un poids à vide de 1,6 kg, dans lequel la décoration présente une proportion de rugosité rms déterminée par microscopie à interférence en lumière blanche dans plage allant de 10 mm$^{-1}$ à 20 mm$^{-1}$ inférieure à 0,1 micromètre ($rms_{10mm-1...20mm-1}$ < 0,1 $\mu$m) et une proportion de rugosité rms dans la plage allant de 20 mm$^{-1}$ à 50 mm$^{-1}$ inférieure à 0,045 micromètre ($rms_{20mm-1...50mm-1}$ < 0,045 $\mu$m).

2. Substrat revêtu selon la revendication 1, dans lequel la décoration présente une proportion de rugosité rms déterminée par microscopie à interférence en lumière blanche dans plage allant de 10 mm$^{-1}$ à 20 mm$^{-1}$ inférieure à 0,05 micromètre ($rms_{10mm-1...20mm-1}$ < 0,05 $\mu$m), de préférence $rms_{10mm-1...20mm-1}$ < 0,02 $\mu$m, et une proportion de rugosité rms dans la plage allant de 20 mm$^{-1}$ à 50 mm$^{-1}$ inférieure à 0,03 micromètre ($rms_{20mm-1...50mm-1}$ < 0,03 $\mu$m), de préférence $rms_{20mm-1...50mm-1}$ < 0,015 $\mu$m.

3. Substrat selon la revendication 1 ou 2, dans lequel le revêtement est constitué par une fritte de verre brûlée à base de verres de silicate, de verres de borosilicate, de verres de silicate de zinc, de verres de borate de zinc, de verres de borosilicate de zinc, de verres de borosilicate de bismuth, de verres de borate de bismuth, de verres de silicate de bismuth, de verres de phosphate, de verres de phosphate de zinc, de verres d'aluminosilicate ou de verres d'aluminosilicate de lithium.

4. Substrat selon l'une quelconque des revendications précédentes, dans lequel la fritte de verre comprend des additifs constitués par des pigments et/ou des charges et/ou des particules structurantes.

5. Substrat selon l'une quelconque des revendications précédentes, qui est constitué par une vitrocéramique, notamment une vitrocéramique LAS, notamment destiné à une utilisation en tant que surface de cuisson variable, notamment en tant que surface de cuisson par induction variable.

6. Procédé de décoration d'un substrat en verre ou en vitrocéramique, notamment pour une surface de cuisson par induction en vitrocéramique, comprenant une décoration optimisée sur le plan acoustique à base de verre ayant une acuité et un volume sonore faibles, selon lequel une fritte de verre est broyée à une taille de particule D90 de 10 nanomètres à 50 micromètres, de préférence de 20 nanomètres à 10 micromètres, de manière particulièrement préférée de 2 à 10 micromètres, et mélangée avec un milieu de dispersion, et homogénéisée essentiellement sans agglomérats de telle sorte qu'essentiellement aucun aggloméré > 20 micromètres ne soit présent, puis appliquée sur une surface du substrat et brûlée, de telle sorte que la surface présente une proportion de rugosité rms déterminée par microscopie à interférence en lumière blanche dans plage allant de 10 mm$^{-1}$ à 20 mm$^{-1}$ inférieure à 0,1 micromètre ($rms_{10mm-1...20mm-1}$ < 0,1 $\mu$m) et une proportion de rugosité rms dans la plage allant de 20 mm$^{-1}$ à 50 mm$^{-1}$ inférieure à 0,045 micromètre ($rms_{20mm-1...50mm-1}$ < 0,045 $\mu$m), et de telle sorte que le substrat revêtu présente une acuité < 3 acum et un volume sonore < 7 sone, mesurés selon DIN 45631/A1:2010-03 et DIN 45692:2009-08 sur le substrat revêtu avec la décoration ayant les dimensions extérieures 500 x 550 mm$^2$, en utilisant une casserole en acier émaillé à fond émaillé de la société Silit, de type plat de cuisson Silargan® Accento de 20 cm ayant un diamètre du fond de 17 cm et un poids logé à l'intérieur d'une masse de 1 kg, avec déplacement de la casserole à une vitesse de 0,08 m/s, la casserole présentant un fond émaillé ayant une dureté de Vickers de 635 $\pm$ 50 HV, 0,1/10 selon DIN EN ISO 6507-1 et une rugosité Ra comprise entre 0,2 et 0,9 $\mu$m selon DIN EN ISO 4288:1998, un diamètre du fond de 17 cm, une hauteur de 8,5 cm, un diamètre intérieur au niveau du bord supérieur de 20 cm et un poids à vide de 1,6 kg.

7. Procédé selon la revendication 6, selon lequel la décoration est brûlée de telle sorte que la surface présente une proportion de rugosité rms déterminée par microscopie à interférence en lumière blanche dans plage allant de 10 mm$^{-1}$ à 20 mm$^{-1}$ inférieure à 0,2 micromètre (rms$_{10mm-1...20mm-1}$ < 0,02 $\mu$m) et une proportion de rugosité rms dans la plage allant de 20 mm$^{-1}$ à 50 mm$^{-1}$ inférieure à 0,015 micromètre (rms$_{20mm-1...50mm-1}$ < 0,015 $\mu$m).

8. Procédé selon la revendication 6 ou 7, selon lequel le broyage et l'homogénéisation de la fritte de verre ont lieu de telle sorte qu'essentiellement aucun agglomérat > 10 micromètres, de manière particulièrement préférée > 5 micromètres, ne soit présent.

9. Procédé selon l'une quelconque des revendications 6 à 8, selon lequel un procédé de broyage à sec, notamment avec des broyeurs à billes, des broyeurs à jets, des broyeurs à contre-jets ou des broyeurs à air, ou également des combinaisons de broyeurs à billes et de broyeurs à jet, ainsi que de broyeurs à contre-jets, qui fonctionnent avec de la vapeur surchauffée, est utilisé pour le broyage de la fritte de verre.

10. Procédé selon l'une quelconque des revendications 6 à 9, selon lequel des additifs, notamment des pigments, des charges et/ou des particules structurantes, sont incorporés dans la fritte de verre et homogénéisés avec celle-ci.

11. Procédé selon l'une quelconque des revendications 6 à 10, selon lequel au plus 20 % en poids, de préférence 10 % en poids, de manière davantage préférée au plus 7 % en poids, de manière particulièrement préférée au plus 5 % en poids, de pigments et/ou de charges sont ajoutés à la fritte de verre après le broyage.

12. Procédé selon l'une quelconque des revendications 6 à 11, selon lequel des pigments et/ou des charges sont ajoutés, qui sont fondus et broyés conjointement avec le flux de verre, avant l'application de la décoration sur la surface de verre.

13. Procédé selon l'une quelconque des revendications 6 à 12, selon lequel une vitrocéramique, notamment une vitrocéramique LAS, est utilisée en tant que substrat, sur laquelle la décoration est appliquée à l'état de verre vert et la décoration est brûlée, le verre vert étant simultanément céramisé.

14. Procédé selon l'une quelconque des revendications 6 à 12, selon lequel une vitrocéramique, notamment une vitrocéramique LAS, est utilisée en tant que substrat, sur laquelle la décoration est appliquée à l'état céramisé et la décoration est brûlée.

| Streifenmuster | Abstand | Breite | Flächenbelegung (%) |
|---|---|---|---|
| 5 | 10 | 1 | 10,00% |
| 6 | 10 | 0,3 | 3,00% |
| 7 | 2 | 1 | 50,00% |
| 8 | 2 | 0,3 | 15,00% |

Fig. 1: Streifenmuster

| Streifenmuster | Abstand | Breite | Flächenbelegung (%) |
|---|---|---|---|
| 1 | 50 | 0,3 | 0,60% |
| 2 | 50 | 1 | 2,00% |
| 3 | 50 | 5 | 10,00% |
| 4 | 10 | 5 | 50,00% |

Figur 2: Streifenmuster

| Punktmuster | Abstand [mm] | Breite [mm] | Flächenbelegung (%) |
|---|---|---|---|
| 9 | 2 | 0,75 | 11% |
| 10 | 2 | 1,5 | 44% |
| 11 | 8 | 3 | 11% |
| 12 | 8 | 6 | 44% |

Fig. 3: Punktmuster-Layout (quadratische Anordnung)

| Unstöchiometrische Raster | Flächenbelegung (%) |
|---|---|
| 13 (fein + wenig Dekor) | 17% |
| 14 (grob + wenig Dekor) | 8% |
| 15 (fein + viel Dekor) | 42% |
| 16 (grob + viel Dekor) | 47% |

Fig. 4: Unstöchiometrische Rasteranordnung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2007101134 B
- JP 2014037926 B
- JP 2003217811 B
- JP 2004170754 B
- DE 10338165 A1
- DE 102004002766 A1
- DE 102011115379 A1
- DE 102013102221 A1
- WO 2014037926 A